(19) Europäisches Patentamt
European Patent Office
Office européen des brevets

(11) EP 1 721 923 A1

(12) **EUROPEAN PATENT APPLICATION**
published in accordance with Art. 158(3) EPC

(43) Date of publication:
**15.11.2006 Bulletin 2006/46**

(21) Application number: **05719734.5**

(22) Date of filing: **23.02.2005**

(51) Int Cl.:
***C08G 64/24*** *(2006.01)* ***C08K 3/34*** *(2006.01)*
***C08L 69/00*** *(2006.01)*

(86) International application number:
**PCT/JP2005/003419**

(87) International publication number:
**WO 2005/082972 (09.09.2005 Gazette 2005/36)**

(84) Designated Contracting States:
**DE FR GB**

(30) Priority: **26.02.2004 JP 2004051139**

(71) Applicant: **Teijin Chemicals, Ltd.**
**Tokyo 100-0011 (JP)**

(72) Inventors:
- **IMAMURA, Koichi, c/o Teijin Chemicals Ltd. Chiyoda-ku, Tokyo 100-0011 (JP)**
- **MITSUNAGA, Masaki, c/o Teijin Chemicals Ltd. Chiyoda-ku, Tokyo 100-0011 (JP)**
- **HATANAKA, Kunio, c/o Teijin Chemicals Ltd. Chiyoda-ku, Tokyo 100-0011 (JP)**
- **HIRONAKA, Katsuhiko, c/o Teijin Chemicals Ltd. Chiyoda-ku, Tokyo 100-0011 (JP)**

(74) Representative: **Albrecht, Thomas**
**Kraus & Weisert,**
**Thomas-Wimmer-Ring 15**
**80539 München (DE)**

# (54) AROMATIC POLYCARBONATE RESIN COMPOSITION AND PROCESS FOR PRODUCING THE SAME

(57) This invention aims at providing an aromatic polycarbonate resin composition having high elasticity with a small content of an inorganic filler and a process for the production thereof, and provides a process for the production of a resin composition comprising 100 parts by weight of an aromatic polycarbonate (Component A) and 0.01 to 50 parts by weight of a silicate filler (Component B),
(I) Component B being a silicate filler prepared by introducing at least one compound (Component B-1) selected from (i) an organosilicon compound (Component B-1-i) containing a hydrolyzable group and/or a hydroxyl group bonded to a silicon atom and (ii) an organic titanate compound (Component B-1-ii) into a lamellar silicate (Component B-2) having an cation exchange capacity of 50 to 200 milliequivalents/100 g,
(II) the process comprising causing a polymer precursor of Component A to undergo interfacial polycondensation reaction in the presence of Component B and in the substantial absence of a polymerization catalyst, and the resin composition.

EP 1 721 923 A1

**Description**

Technical Field

The present invention relates to a resin composition comprising an aromatic polycarbonate and a lamellar silicate. More specifically, it relates to an aromatic polycarbonate resin composition produced by an interfacial polycondensation method that uses, as a lamellar silicate, a lamellar silicate containing an organosilicon compound and/or organic titanate compound introduced into it and that is carried out in the presence of the above lamellar silicate and in the substantial absence of a polymerization catalyst, and a process for the production thereof. Further, the present invention relates to an aromatic polycarbonate resin composition that exhibits high elasticity based on an unconventionally small amount of a silicate filler.

Technical Background

Since being excellent in transparency, impact resistance, dimensional accuracy and heat resistance, a polycarbonate resin is widely used in fields typified by precision machines and equipment, automobiles and office automation machines and equipment. For improving the resin in mechanical properties and heat resistance, further, there are used polycarbonate resin compositions containing a variety of inorganic fillers.

In recent years, active studies have been being made with regard to techniques for attaining high-rigidity resin compositions by incorporating a relatively small amount of inorganic fillers. One of purposes thereof is to provide a resin material that has a lowest possible density and that has high rigidity or low expansion properties (that is, high dimensional accuracy). A typical example of such techniques is a resin composition in which a swelling lamellar silicate is finely dispersed.

The most generally employed method for producing the above composition is a method in which a so-called organized lamellar silicate prepared by ion-exchanging interlayer ion of a swelling lamellar silicate with various organic onium ions is melt-kneaded with a resin (to be sometimes referred to as "kneading method" hereinafter). In another production method, a lamellar silicate swollen with a polymer precursor is prepared and the polymer precursor is caused to undergo a polymerization (to be referred to as "polymerization method" hereinafter). In the polymerization method, the polymer precursor is required to have high affinity to the lamellar silicate, and this method has been studied in many ways with regard to polyamides.

For example, there is known a resin composition produced by a method in which a lamellar silicate prepared by ion-exchange with ammonium 12-aminododecanoate ion is mixed with ε-caprolactam and water, then, the ε-caprolactam is caused to undergo a polymerization and the thus-obtained composition of the lamellar silicate and a polyamide is melt-kneaded with a polycarbonate resin (see Patent Document 1). This method is a technique of applying a lamellar silicate dispersed in a polyamide to a polycarbonate resin composition.

Under a similar technical thought, there is also known a resin composition produced by a method in which a resin composition comprising a polyester resin and a lamellar silicate is prepared by a polymerization method and then this resin composition is melt-kneaded with a polycarbonate resin (see Patent Document 2).

On the other hand, in a polycarbonate resin, a resin composition containing a swelling lamellar silicate, in particular, an organized lamellar silicate has been studied while a kneading method is focused on. For example, there is known a resin composition obtained by melt-kneading a polycarbonate resin and a lamellar silicate that is subjected to ion-exchange with an organic onium ion containing an alkyl group having at least 12 carbon atoms (see Patent Document 3).

There is known a resin composition obtained by melt-kneading a polycarbonate resin and a lamellar silicate that is subjected to ion-exchange with organic onium ion containing a polyethylene glycol chain (see Patent Document 4).

There is also known a resin composition obtained by melt-kneading a polycarbonate resin and a lamellar silicate that is treated with a coupling agent and subjected to ion-exchange with organic onium ion (see Patent Document 5). According to this Document, it is known that no sufficient properties are exhibited without the treatment with any one of the coupling agent and the organic onium ion.

According to the above Documents 3 to 5, further, it is known that a similar resin composition can be produced by mixing a lamellar silicate treated with an organic onium ion and a coupling agent with a polymer material that is not yet polymerized and by melt polymerizing the material, and that mechanical shear force is essential in a molten state when the lamellar silicate is mixed with the polycarbonate resin. However, these Documents disclose no resin composition that is caused to undergo substantially melt polymerization.

In the polymerization method, attempts have been already made to utilize a lamellar silicate treated with a coupling agent. A method for obtaining a resin composition by mixing the above lamella silicate with a polymer precursor and causing the precursor to undergo polymerization has been proposed with regard to a polyamide resin (see Patent Document 6).

There is known a method in which a lamellar silicate treated with a coupling agent is mixed with a dialkyl carbonate or water, the thus-obtained mixture is further mixed with bisphenol A and a dialkyl carbonate under high pressure and then the pressure is decreased for volatilization to carry out melt polymerization whereby a polycarbonate resin composition is produced (see Patent Document 7). It can be said that this method uses the technique known in the above Documents 3 to 5. That is, this method utilizes the action of a mechanical shear force to carry out melt polymerization. On the other hand, the above Document discloses that a polyarylate resin composition containing a lamellar silicate can be obtained by incorporating a lamellar silicate treated with a coupling agent when a polyallylate resin is subjected to interfacial polycondensation in the presence of an interlayer transfer catalyst.

As a lamellar-silicate-containing polycarbonate resin composition in a kneading method, there is known a resin composition containing a polycarbonate resin, a specific organized lamellar silicate and a compound having a specific group and properties, which compound is typified by a styrene-maleic anhydride copolymer (see Patent Document 8). When a flexural modulus is taken as a reference criterion, the composition according to the polymerization method in the above Document 7 and the composition in Document 8 have like performances. However, there are further cases where there is demanded a polycarbonate resin composition that has imparted with high rigidity based on a smaller amount of an inorganic filler, and its appearance is being expected.

(Patent Document 1) JP-A-3-215558
(Patent Document 2) JP-A-9-143359
(Patent Document 3) JP-A-7-207134
(Patent Document 4) JP-A-7-228762
(Patent Document 5) JP-A-7-331092
(Patent Document 6) WO95/06090 Pamphlet
(Patent Document 7) WO00/22042 Pamphlet
(Patent Document 8) WO03/010235 Pamphlet

Disclosure of the Invention

(Problems to be Solved by the Invention)

It is an object of the present invention to provide an aromatic polycarbonate resin composition having high elasticity with a small amount of an inorganic filler and a process for the production thereof. It is an object of the present invention to provide a high-elasticity aromatic polycarbonate resin composition in particular by using a so-called swelling lamellar silicate as the above inorganic filler and a process for the production thereof.

The present inventors have reviewed the above prior art for overcoming the above problems. As is clear from the above description, there is not specially known any process for producing a resin composition in which the interfacial polycondensation for a polycarbonate is carried out in the presence of a lamellar silicate. While no special advantage of the interfacial polycondensation method has been recognized as far as the data of the polyallylate described in the above Document 7 has been read, the present inventors have made studies with regard to possibilities thereof.

Initially, the present inventors carried out an interfacial polycondensation reaction for a polycarbonate by using, as a reference, what was found with regard to the interfacial polycondensation reaction of a polyallylate in Document 7. In this method, however, it was found that almost no lamellar silicate is contained in a polycarbonate resin. The present inventors have investigated its causes and ultimately obtained a polycarbonate resin composition containing a lamellar silicate by an interfacial polycondensation reaction. Further, it was described that shear force actions such as stirring and kneading were required for dispersing a lamellar silicate in a polycarbonate resin. However, it has been surprisingly found that a resin composition having superior properties can be obtained by carrying out the polymerization rather without the action of the shear force. It has been more surprisingly found that the obtained resin composition has high elasticity remarkably excellent over the property of any conventionally known resin composition. The present inventors have made further studies on the basis of the above finding and have completed the present invention that overcomes the above problems.

(Means to Solve the Problems)

According to the present invention, there is provided a process for the production of a resin composition comprising 100 parts by weight of an aromatic polycarbonate (Component A) and 0.01 to 50 parts by weight of a silicate filler (Component B), wherein,

(I) Component B being a silicate filler prepared by introducing at least one compound (Component B-1) selected from (i) an organosilicon compound (Component B-1-i) containing a hydrolyzable group and/or a hydroxyl group

bonded to a silicon atom and (ii) an organic titanate compound (Component B-1-ii) into a lamellar silicate (Component B-2) having an cation exchange capacity of 50 to 200 milliequivalents/100 g,
(II) the process comprising reacting a polymer precursor of Component A by means of an interfacial polycondensation in the presence of Component B and in the substantial absence of a polymerization catalyst.

The first essential point in this case is to use a silicate filler (Component B) prepared by introducing the specific organosilicon compound (Component B-1-i) and/or organic titanate compound (Component B-1-ii) into a specific lamellar silicate. When Component B is not used, a resin composition containing a lamellar silicate can be obtained, but its rigidity is insufficient. It is thought that the reason therefor is that the lamellar silicate is not dispersed in the resin matrix in such a state that properties derived from the aspect ratio of layers are fully exhibited. The above state refers to a state in which the interlayer distance of the lamellar silicate is widened and each layer binds the resin matrix. That is, it can be said that "not being in the above state" refers to a state in which layers aggregate like a state formed when a lamellar silicate individually is used, and the aggregated lamellar silicate in a body binds the resin matrix.
Since a lamellar silicate at the stage of a raw material is a dispersion in water, it is assumed that the lamellar silicate which is once separated in an aqueous phase or of which the interlayer distance is once widened in an aqueous phase, aggregates again in the process of dehydration and solidification after polymerization. It is assumed that the cause of this aggregation is deficient chemical affinity between a polycarbonate and the lamellar silicate. On the other hand, it is assumed that since Component B has an organic group, the re-aggregation is suppressed by the action of the organic group.
The second essential point is that the polycondensation reaction is carried out in the substantial absence of a polymerization catalyst. The reason why this point is essential is assumed as follows. In the interfacial polycondensation reaction in the present invention, the aqueous phase of the reaction system is largely classified into an aqueous phase surrounding the lamellar silicate and an aqueous phase between layers of the lamellar silicate. The reaction for generating a polycarbonate takes place in interfaces of both of the aqueous phases. When the reaction takes place in the interlayer aqueous phase, pseudo-bonds are generated due to strong affinity of a polycarbonate and the lamellar silicate, whereby the lamellar silicate is taken into the polycarbonate.
The above "taken into" means that the silicate filler is present having a certain degree of affinity to the polycarbonate. More specifically, it refers to a state where the silicate filler is present in a manner in which it stays in the resin without easily moving into an aqueous phase even in the step of washing an obtained polycarbonate resin composition with water for its purification. However, the present inventors have confirmed that the silicate filler can be separated by dissolving an obtained polycarbonate resin composition in an organic solvent. Therefore, the covalent bond to the resin is not necessarily required in the above strong affinity.
On the other hand, when there is an amine compound, a quaternary ammonium salt compound and a quaternary phosphonium salt compound (the polymerization catalyst as used in the present invention refers to these three compounds) which are polymerization catalysts for the interfacial polycondensation reaction for a polycarbonate, these compounds as organic onium ion easily enter interlayer spaces of the lamellar silicate to undergo ion exchange. As a result, the lamellar silicate becomes lipophilic, and an aqueous phase can no longer exist in the interlayer spaces. As a result, the lamellar silicate can be no longer taken into the polycarbonate chain. In addition, when Component B-1-i and/or Component B-1-ii contain or contains an amino group as well, the presence of an organic compound that enters interlayer spaces has high possibility of a great influence being caused since the lamellar silicate is taken into the polycarbonate. The reason for the above second point is estimated as described above.
As is estimated above, the polymerization catalyst is taken into interlayer spaces of the lamellar silicate, so that it not only loses its catalytic activity but also prevents the lamellar silicate from being taken into the polymer. It is hence not thought that the use of the polymerization catalyst has any particular advantage. It is therefore most preferred to carry out the polymerization in a state where the polymerization catalyst is neither added nor present in the reaction system. However, the above characteristic can be utilized to control the taking of the lamellar silicate into the polymer. Therefore, the phrase of "in the substantial absence of a polymerization catalyst" in the present invention does not necessarily mean that the polymerization catalyst not at all present.
That is, it means that the polymerization catalyst may be present in the interfacial polycondensation reaction system so long as the lamellar silicate can be taken into the polymer. The amount of the polymerization catalyst that is present as specified herein is preferably less than $0.5 \times 10^{-4}$ mol, more preferably less than $1 \times 10^{-8}$ mol, per mole of a dihydric phenol that leads to the polycarbonate as Component A.
According to the present invention, there is provided a resin composition produced by the above production process. This resin composition has high elasticity although the content of the inorganic filler is small.

Brief Description of Drawings

Fig. 1 is a graph prepared by plotting data described in Tables 1 and 2 of Examples in coordinates in which

the axis of abscissas indicates contents (wt%) of lamellar silicate calculated from weight ratios of ashed residues obtained by treatment in an electric oven at 600°C for 6 hours and the axis of ordinate indicates storage elastic moduli (MPa).

(Explanations of reference numerals)

1 Data of Example 1
2 Data of Example 2
3 Data of Example 4
4 Data of Comparative Example 1
5 Data of Comparative Example 2
6 Data of Comparative Example 3
7 Data of Comparative Example 4
8 Data of Comparative Example 5
9 Data of Comparative Example 6
10 Dotted line showing the upper limit of the expression (1) of claim 15
11 Dotted line showing the lower limit of the expression (1) of claim 15

Best Mode for carrying out the Invention

The present invention will be further explained in detail hereinafter.

<Component A: Aromatic polycarbonate>

The resin composition of the present invention can be produced by interfacial polycondensation of a polymer precursor for an aromatic polycarbonate in the presence of Component B and in the substantial absence of the polymerization catalyst.

(Polymer precursor)

The term "polymer precursor" in the present invention will be used for giving a generic name to substances that are at a stage before a polycarbonate is formed. The polymer precursor therefore includes dihydric phenol, carbonate-forming derivatives of dihydric phenols (typified by a carbonate oligomer having a chloroformate terminal), carbonate esters of a dihydric phenol, and the like. When phosgene that is the most general carbonate precursor is used, the main component of the polymer precursor is a carbonate oligomer having a chloroformate terminal.

The polymer precursor can be obtained by reacting a dihydric phenol that lead to structural units of Component A, and a carbonate precursor in the presence of an acid binder, an organic solvent and water.

More specifically, the polymer precursor can be prepared preferably by a method in which a dihydric phenol and an aqueous solution of an acid binder are mixed to dissolve the dihydric phenol in the solution, then, the solution is mixed with an organic solvent and a carbonate precursor is added to the mixture. When phosgene is used as a carbonate precursor, the phosgene can be added by any one of a method of blowing it into the mixture and a method of spraying the mixture into a gaseous phase of the phosgene.

The pH value in the reaction system is preferably adjusted to 9 or higher. The reaction temperature is preferably in the range of 0 to 40°C, more preferably 10 to 30°C, still more preferably 15 to 25°C. This temperature range is advantageous for satisfying the dissolving and reactivity of the phosgene. Further, the reaction time period is 5 to 120 minutes, more preferably 10 to 50 minutes.

(Dihydric phenol)

Examples of the dihydric phenol include hydroquinone, resorcinol, 4,4'-biphenol, 1,1-bis(4-hydroxyphenyl) ethane, 2,2-bis(4-hydroxyphenyl)propane (so-called bisphenol A), 2,2-bis(4-hydroxy-3-methylphenyl)propane, 2,2-bis (4-hydroxyphenyl)butane, 1,1-bis(4-hydroxyphenyl)-1-phenylethane, 1,1-bis(4-hydroxyphenyl)cyclohexane, 1,1-bis(4-hydroxyphenyl)-3,3,5-trimethylcyclohexane, 2,2-bis(4-hydroxyphenyl)pentane, 4,4'-(p-phenylenediisopropylidene) diphenol, 4,4'-(m-phenylenediisopropylidene)diphenol, 1,1-bis(4-hydroxyphenyl)-4-isopropylcyclohexane, bis(4-hydroxyphenyl)oxide, bis(4-hydroxyphenyl)sulfide, bis(4-hydroxyphenyl)sulfoxide, bis(4-hydroxyphenyl)sulfone, bis(4-hydroxyphenyl)ketone, bis(4-hydroxyphenyl)ester, bis(4-hydroxy-3-methylphenyl)sulfide, 9,9-bis(4-hydroxyphenyl)fluorene and 9,9-bis(4-hydroxy-3-methylphenyl)fluorene. As a dihydric phenol, bis(4-hydroxyphenyl)alkane is preferred,

and bisphenol A (to be sometimes referred to as "BPA" for short hereinafter) is particularly preferred from the viewpoint of impact resistance.

In the present invention, there may be used other dihydric phenols different from bisphenol A type polycarbonates that are general-purpose polycarbonates.

For example, when 4,4'-(m-phenylenediisopropylidene)diphenol (to be sometimes referred to as "BPM" for short hereinafter), 1,1-bis(4-hydroxyphenyl)cyclohexane, 1,1-bis(4-hydroxyphenyl)-3,3,5-trimethylcyclohexane (to be sometimes referred to as "Bis-TMC" hereinafter), 9,9-bis(4-hydroxyphenyl)fluorene and 9,9-bis(4-hydroxy-3-methylphenyl)fluorene (to be sometimes referred to as "BCF" for short hereinafter) are used as part or the whole of the dihydric phenol component to produce polycarbonates, such polycarbonates (homopolymers or copolymers) are suitable for use in fields where particularly severe requirements are imposed on dimensional changes caused by water absorption and morphological stability. The amount of the above dihydric phenols other than BPA, based on the total amount of dihydric phenol components for constituting the above polycarbonate is preferably 5 mol% or more, particularly preferably 10 mol% or more.

In particular, when high elasticity and excellent hydrolysis resistance are required, particularly preferably, Component A is selected from the following (1) to (3) copolycarbonates.

(1) A copolycarbonate containing, per 100 mol % of the dihydric phenol constituting the polycarbonate, 20 to 80 mol% (more preferably 40 to 75 mol%, still more preferably 45 to 65 mol%) of BPM and 20 to 80 mol% (more preferably 25 to 60 mol%, still more preferably 35 to 55 mol%) of BCF.

(2) A copolycarbonate containing, per 100 mol % of the dihydric phenol constituting the polycarbonate, 10 to 95 mol% (more preferably 50 to 90 mol%, still more preferably 60 to 85 mol%) of BPA and 5 to 90 mol% (more preferably 10 to 50 mol%, still more preferably 15 to 40 mol%) of BCF.

(3) A copolycarbonate containing, per 100 mol % of the dihydric phenol constituting the polycarbonate, 20 to 80 mol% (more preferably 40 to 75 mol%, still more preferably 45 to 65 mol%) of BPM and 20 to 80 mol% (more preferably 25 to 60 mol%, still more preferably 35 to 55 mol%) of Bis-TMC.

The production method and properties of these particular kinds of polycarbonates are described in detail, for example, in JP-A-6-172508, JP-A-8-27370, JP-A-2001-55435, JP-A-2002-117580, and the like. The polycarbonate resin composition of the present invention can be produced by the interfacial polycondensation reaction based on the above methods in the presence of Component B and in the substantial absence of the polymerization catalyst.

Of the above various polycarbonates, a polycarbonate for which the copolymerization composition is adjusted so as to give a water absorption and Tg (glass transition temperature) in the following ranges is excellent in hydrolysis resistance as a polymer per se and is remarkably excellent in the property of low warpage after molded, so that it is particularly suitable in fields where morphological stability is required.

(i) A polycarbonate having a water absorption of 0.05 to 0.15 %, preferably 0.06 to 0.13 %, and a Tg of 120 to 180°C, or

(ii) a polycarbonate having a Tg of 160 to 250°C, preferably 170 to 230°C and a water absorption of 0.10 to 0.30 %, preferably 0.13 to 0.30 %, still more preferably 0.14 to 0.27 %.

The above water absorption of a polycarbonate refers to a value obtained by providing a disk-shaped test piece having a diameter of 45 mm and a thickness of 3.0 mm, immersing the test piece in water at 23°C for 24 hours and then measuring its water content according to ISO62-1980. Further, the above Tg (glass transition temperature) refers to a value determined by measurement with a differential scanning calorimeter (DSC) according to JIS K7121.

(Carbonate precursor)

The carbonate precursor is selected from carbonyl halides and haloformates. Specific examples thereof include phosgene and dihaloformates of dihydric phenols, and phosgene is particularly preferred.

(Acid binder)

The acid binder is preferably selected from hydroxides of alkali metals or alkaline earth metals. Of these hydroxides, for example, sodium hydroxide, potassium hydroxide, lithium hydroxide and calcium hydroxide are preferred, and sodium hydroxide and potassium hydroxide are particularly preferred.

(Organic solvent)

The organic solvent is selected from solvents that are substantially insoluble in water and inert to the reaction

and that dissolve a polycarbonate generated by the reaction. Examples of such organic solvents include methylene chloride, chlorinated aliphatic hydrocarbons such as 1,2-dichloroethane, tetrachloroethane and chloroform, chlorinated aromatic hydrocarbons such as chlorobenzene, dichlorobenzene and chlorotoluene, acetophenone, cyclohexanone and anisole. These may be used singly or as a mixture of the two or more of these. Of these, methylene chloride is the most preferred organic solvent.

(capping agent, antioxidant, etc.)

In the present invention, a terminal stopper may be used. A monohydric phenol can be used as a terminal stopper. The monohydric phenol is preferably selected, for example, from phenol, p-tert-butyl phenol or p-cumyl phenol. The monohydric phenol further includes, for example, decyl phenol, dodecyl phenol, tetradecyl phenol, hexadecyl phenol, octadecyl phenol, eicosyl phenol, docosyl phenol and triacontyl phenol. These monohydric phenols having relatively long alkyl group are effective when improvements in fluidity and hydrolysis resistance are required. These terminal stoppers may be used singly or as a mixture of the two or more of these.

In the interfacial polycondensation reaction for the polycarbonate, an antioxidant may be used for preventing the oxidation of the dihydric phenol. The antioxidant is preferably selected from reducing agents typified by hydrosulfite.

Further, the polycarbonate of the present invention may be a branched polycarbonate obtained by copolymerizing a polyfunctional aromatic compound having three or more functional groups or a polyester carbonate obtained by copolymerizing an aromatic or aliphatic (including "alicyclic") difunctional carboxylic acid.

The above polyfunctional aromatic compound having three or more functional groups used for a branched polycarbonate resin includes fluoroglucine, fluoroglucide, trisphenols such as 4,6-dimethyl-2,4,6-tris(4-hydroxydiphenyl) heptene-2, 2,4,6-trimethyl-2,4,6-tris(4-hydroxyphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl)ethane, 2,6-bis(4-hydroxy-5-methylbenzyl)-4-methylphenol, 4-{4-[1,1-bis(4-hydroxyphenyl)ethyl]benzene-a,a-dimethylphenol, tetra(4-hydroxyphenyl)methane, bis(2,4-dihydroxyphenyl)ketone and 1,4-bis(4,4-dihydroxytriphenylmethyl)benzene, and also includes trimellitic acid, pyromellitic acid, benzophenone tetracarboxylic acid and acid chlorides of these. Of these, 1,1,1-tris(4-hydroxyphenyl)ethane and 1,1,1-tris(3,5-dimethyl-4-hydroxyphenyl)ethane are preferred, and 1,1,1-tris(4-hydroxyphenyl)ethane is particularly preferred.

In the branched polycarbonate, the content of structural units to which the polyfunctional aromatic compound leads, per 100 mol% of total of structural units to which the dihydric phenol leads and the structural units to which the polyfunctional aromatic compound leads, is 0.001 to 1 mol%, preferably 0.005 to 0.9 mol%, more preferably 0.01 to 0.8 mol%, particularly preferably 0.05 to 0.4 mol%. The amount of the branching structure can be calculated by $^1$H-NMR measurement.

As an aliphatic difunctional carboxylic acid, $\alpha,\omega$-dicarboxylic acid is preferred. Examples of the aliphatic difunctional carboxylic acid include linear saturated aliphatic dicarboxylic acids such as sebacic acid (decanedioic acid), dodecanedioic acid, tetradecanedioic acid, octadecanedioic acid and eicosanedioic acid, and alicyclic dicarboxylic acids such as cyclohexanedicarboxylic acid. Further, there can be also used a polycarbonate-polyorganosiloxane copolymer obtained by copolymerization of polyorganosiloxane unit.

(Weight average molecular weight and molecular weight distribution)

The weight average molecular weight of the aromatic polycarbonate as Component A in the present invention is preferably in the range of 10,000 to 100,000, more preferably in the range of 20,000 to 80,000, still more preferably in the range of 30,000 to 70,000. The weight average molecular weight of a polycarbonate in the resin composition can be calculated by dissolving the resin composition in a good solvent such as methylene chloride or chloroform, separating a soluble content by filtering and measuring the resultant soluble content for a molecular weight.

The weight average molecular weight as used herein refers to a value obtained by calculation according to the following GPC (gel permeation chromatography) method. That is, a GPC measuring apparatus placed under an environment of clean air having a temperature of 23°C and a relative humidity of 50 % is used, SEC column "MIXED-D" (length 300 mm, internal diameter 7.5 mm) supplied by Polymer Laboratory Corp. is used as a column, chloroform is used as a mobile phase, Easi Cal PS-2 (reference polystyrene) supplied by Polymer Laboratory Corp. is used as a reference material, a differential diffractometer is used as a detector, chloroform is used as a developing solvent, 100 $\mu$l of a solution of about 2 mg of a sample per ml of the above chloroform is injected into the GPC measuring apparatus, and GPC measurement is conducted under conditions including a column temperature at 35°C and a flow rate at 1 ml/minute. With regard to the thus-obtained data, a base line is determined by connecting the leading edge of a chart and the convergence point thereof, whereby a weight average molecular weight and a number average molecular weight of the polycarbonate are determined.

In the present invention, an emulsification state is stably maintained as will be described later, and the interfacial

polycondensation for a polycarbonate proceeds, so that a polycarbonate having an excellent molecular weight distribution as well is synthesized. The molecular weight distribution (weight average molecular weight/number average molecular weight) of Component A in the present invention is preferably in the range of 2 to 30, more preferably in the range of 2 to 5, still more preferably 2 to 3. According to the present invention, there can be provided a method of interfacial polycondensation for producing a polycarbonate resin composition having a molecular weight distribution of 2 to 3 like a general polycarbonate resin and containing a lamellar silicate.

<Component B: Silicate filler>

Component B is a silicate filler prepared by introducing at least one compound (Component B-1) selected from (i) an organosilicon compound (Component B-1-i) containing a hydrolyzable group and/or a hydroxyl group bonded to a silicon atom and (ii) an organic titanate compound (Component B-1-ii) into a lamellar silicate (Component B-2) having an cation exchange capacity of 50 to 200 milliequivalents/100 g. Components for Component B will be explained.

(Component B-2: Lamellar silicate)

The lamellar silicate (Component B-2) is a silicate or clay formed of layers that are formed from a combination of an $SiO_4$ tetrahedral sheet structure formed of $SiO_2$-connecting chains and an octahedral structure containing Al, Mg, Li, etc., and exchangeable cation being coordinate-bonding in interlayer spaces.

The above silicate or clay is typified by a smectite minerals, vermiculite, halloysite, swelling mica, and the like. Specifically, the smectite minerals include montmorillonite, hectorite, fluorohectorite, saponite, heidellite and stevensite. The swelling mica includes swelling synthesis mica such as Li type fluorotainiolite, Na type fluorotainiolite and Na type tetrasilicon fluoromica and Li type tetrasilicon fuluromica. These Components B-2 may be natural products or synthesis products. The synthesis products are produced by hydrothermal synthesis, melt-synthesis or a solid reaction.

Of the lamellar silicates, smectite minerals such as montmorillonite and hectorite and fluorine mica having the swelling property such as Li type fluoroteaniolite, Na type fluoroteaniolite and Na type tetrasilicon fluoromica are suitably used from the viewpoint of a cation exchange capacity, and montmorillonite obtained by purifying bentonite and synthesis fluoromica are preferred from the viewpoint of purity.

Component B-2 is required to have a cation exchange capacity (also called "cation exchange capability") of 50 to 200 milliequivalents/100 g, and the cation exchange capacity thereof is preferably 80 to 150 milliequivalents/100 g, still more preferably 100 to 150 milliequivalents/100 g.

The cation exchange capacity is measured as a CEC value by an improved Schöllenberger method that is a domestic officially accepted method as a standard soil analysis method. This method is outlined as follows. An infiltration tube of a soil leaching apparatus having a length of 12 cm and an internal diameter of 1.3 cm was filled with a lamellar silicate sample to a thickness of approximately 8 cm, and 100 ml of a 1N ammonium acetate aqueous solution having a pH of 7 is caused to infiltrate over 4 to 20 hours, to exchange and leach cation. Then, the sample is washed with 100 ml of 80 % methanol having a pH of 7 to remove excess ammonium acetate. Then, the sample is washed with 100 ml of a 10 % potassium chloride aqueous solution to exchange and leach ammonium ion ($NH^{4+}$) adsorbed on the sample. Finally, $NH^{4+}$ in a leachate is quantitatively determined by a steam distillation method or a Conway microdiffusion method, to calculate CEC. As a soil leaching apparatus, a commercially available set made of glass can be used. The improved Schöllenberger method_ that constitutes a base for the above improvement method is referred to in Soil Sci., 59, 13-24 (1945).

The cation exchange capacity is required to be at least 50 milliequivalents/100 g for obtaining good dispersibility into the aromatic polycarbonate. When it exceeds 200 milliequivalents/100 g, the thermal deterioration of the aromatic polycarbonate resin composition is increased.

Component B-2 is preferably a lamellar silicate having an average particle diameter of at least 0.1 μm but less than 5 μm. The average particle diameter as used herein refers to a particle diameter corresponding to an accumulation degree of 50 % in particle diameters measured by a laser diffraction scattering method. In the present invention, it is essential to stably maintain an emulsification state during the interfacial polycondensation, for producing an excellent resin composition. However, the presence of the silicate filter is a factor that destabilizes the emulsification. When the emulsification state is destabilized, the reaction rate decreases, and the increase in the polymerization degree (molecular weight) of the polycarbonate comes to be suppressed. This destabilization of the emulsification state comes to be marked as the particle diameter of the silicate filler increases. In the present invention, preferably, the average particle diameter is in the above range for stably maintaining the emulsification state. The upper limit of the above average particle diameter is preferably 4 μm, more preferably 2 μm. By bringing the average particle diameter into the above range, there can be obtained a resin composition containing a polycarbonate having a molecular weight that is more preferred in practical use.

The heat of wetting of Component B-2 is preferably at least 1 J/g, more preferably at least 30 J/g, still more preferably at least 70 J/g. This heat of wetting increases as the number of active spots increases, and it constitutes a

numerical index for the surface area and active spots of the lamellar silicate. As the above heat of wetting becomes greater, the number of active spots per unit weight increases. As a result, the effect produced by the introduction of Component B-1 is enhanced, which leads to more excellent dispersing of the silicate filler in the resin.

Further, Component B-2 preferably has a pH value of 7 to 11.5. When the pH value is greater than 11.5, the tendency toward a decrease in thermal stability of the resin composition comes to appear.

<Component B-1-i: Organosilicon compound>

Component B-1-i is an organic silicon compound containing a hydrolyzable group and/or hydroxyl group bonded to a silicon atom. Component B-1-i has a monovalent organic group other than the hydrolyzable group bonded to a silicon atom, in addition to the hydrolyzable group and/or hydroxyl group.

(Hydrolyzable group)

The hydrolyzable group refers to a group that reacts with water to generate silanol. Specifically, examples thereof include a hydrogen atom, a halogen atom, an alkoxy group, an alkenyloxy group, a ketoxime group, an acyloxy group, an amino group, an aminooxy group and an amide group, which bond to silicon atoms. Of these, a hydrogen atom, a halogen atom and an alkoxy group are preferred. An alkoxy group is more preferred, and the number of carbon atoms thereof is preferably in the range of 1 to 5. And, methoxy group and ethoxy group are particularly preferred. The content of the hydrolyzable group and/or hydroxyl group bonded to a silicon atom in Component B-1-i is preferably in the range of 0.1 to 6.5 mol/100 g, more preferably 0.15 to 2 mol/100 g.

(Organic group)

The monovalent organic group refers to an organic group that may have a hetero atom, and the number of carbon atoms thereof is preferably in the range of 1 to 60, more preferably in the range of 2 to 30.

The hydrocarbon as a source that leads to the organic group may be any one of an aliphatic hydrocarbon, an alicyclic hydrocarbon and an aromatic hydrocarbon, and they may contain at least one unsaturated bond (carbon-carbon double bond or triple bond). More specifically, examples of the organic group include an alkyl group, an alkenyl group, a phenyl group, a naphthyl group and a cylcoalkyl group.

The organic group may contain various functional groups and a bond containing a hetero atom. Examples of these functional groups and bond include an amino group, an epoxy group, a carboxyl group, an amide group, a mercapto group, a nitro group, a nitroso group, a halogen atom and a hydroxyl group, and also include an ester bond, an ether bond, a carbonyl bond, a sulfonyl bond and a sulfinyl bond. Two or more members of these functional groups and bonds may be contained per silicon compound, and further, two or more members of them may be contained per organic group.

As Component B-1-i, an organosilicon compound of the following formula (I) is preferred.

$$X_n\text{—}Si\text{—}R_{4-n} \qquad (I)$$

In the formula (I), n is an integer of 1 to 3. each of X's in an quantity of n may be the same as, or different from, the other or every other, and R's in a quantity of 4-n may be the same as, or different from, the other or every other.

R is a monovalent organic group having 2 to 30 carbon atoms, which may contain a hetero atom. The hydrocarbon as a source that leads to the organic group includes an aliphatic hydrocarbon having 2 to 30 carbon atoms, an alicyclic hydrocarbon and an aromatic hydrocarbon. Each of these may contain one or more unsaturated bonds (carbon-carbon double bond or triple bond). More specifically, examples of the organic group include an alkyl group, an alkenyl group, a phenyl group, a naphthyl group and a cycloalkyl group. The organic group may contain various functional groups and a bond containing a hetero atom as described above.

X is a hydrolyzable group or a hydroxyl group. Examples of the hydrolyzable group include a hydrogen atom, a halogen atom, an alkoxy group, an alkenyloxy group, a ketoxime group, an acyloxy group, an amino group, an aminooxy group and an amide group as described above. Of these, a hydrogen atom, a halogen atom and an alkoxy group are preferred. Further preferred is an alkoxy group, and the number of carbon atoms thereof is in the range of 1 to 5. And, methoxy and ethoxy are particularly preferred.

Examples of the organosilicon compound in a case where R is a hydrocarbon group having 2 to 30 carbon atoms include a compound containing a linear long-chain-alkyl-group (alkyl group having at least 12 carbon atoms) such as dodecyltrimethoxysilane, a compound containing a lower alkyl group (alkyl group having 11 carbon atoms or less) such as propyltrimethoxysilane, a compound containing a branched alkyl group such as 2-ethylhexyltrimethoxysilane, a compound containing an unsaturated hydrocarbon group such as 2-hexenyltrimethylsilane, a compound containing an aromatic hydrocarbon group such as phenyltrimethoxysilane and a compound containing an aralkyl group such as

benzyltrimethoxysilane.

Examples of the organosilicon compound in a case where R has a functional group include an amino-group-containing compound such as γ-aminopropyltrimethoxysilane, an epoxy-group-containing compound such as γ-glycidoxypropyltrimethoxysilane, a carboxyl-group-containing compound such as γ-(4-carboxyphenyl)propyltrimethoxysilane, a mercapto-group-containing compound such as γ-mercaptopropyltrimethoxysilane, a nitro-group-containing compound such as γ-nitropropyltrimethoxysilane, a nitroso-group-containing compound such as γ-nitrosopropyltrimethoxysilane, a nitrile-group-containing compound such as γ-cyanoethyltrimethoxysilane, a halogen-containing compound such as γ-chloropropyltrimethoxysilane and a hydroxyl-group-containing compound such as N,N-di(2-hydroxyethyl)amino-3-propyltriethoxysilane.

Examples of the oragnosilane compound in a case where R has a bond containing a hetero atom include an ester-bond-containing compound such as γ-methacryloxypropyltrimethoxysilane, an ether-bond-containing compound such as 2-ethoxyethyltrimethoxysilane, a carbonyl-bond-containing compound such as γ-ureidopropyltrimethoxysilane, a sulfonyl-bond-containing compound such as γ-phenylsulfonylpropyltrimethoxysilane and a sulfinyl-bond-containing compound such as γ-phenylsulfinylpropyltrimethoxysilane. It is thought that these compounds have in general a large content of hydrolyzable groups per unit weight, have high reactivity with the lamellar silicate and are hence more uniformly introduced into each layer of the lamellar silicate.

<Component B-1-ii: Organic titanate compound>

The organic titanate compound refers to a compound having a titanium atom and having a hydrolyzable group and a hydrophobic group as organic groups. This chemical structure is not specially limited, and the organic titanate compound can be any one of a monoalkoxy compound, a chelate compound and a coordination compound that are conventionally known as titanate coupling agents.

The monoalkoxy organic titanate compound includes compounds of the following general formula (II).

$$(R^1O)_m—Ti—R^2_{4-m} \qquad \text{(II)}$$

In the formula (II), $R^1$ is an alkyl group having 1 to 6 carbon atoms, $R^2$ is a monovalent organic group having 4 to 20 carbon atoms and m is an integer of 1 to 3.

The alkyl group having 1 to 6 carbon atoms, represented by $R^1$, includes methyl group, ethyl group, propyl group and isopropyl group.

The monovalent organic group having 4 to 20 carbon atoms, represented by $R^2$, refers to an organic group that may contain a hetero atom. The hydrocarbon as a source that leads to the organic group includes an aliphatic hydrocarbon, an alicyclic hydrocarbon and an aromatic hydrocarbon. Further, they may contain one or more unsaturated bonds (carbon-carbon double bond or triple bond).

The organic group may contain various functional groups and a bond containing a hetero atom. Examples of the functional groups and the bond include an amino group, an epoxy group, a carboxyl group, an amide group, a mercapto group, a nitro group, a nitroso group, a halogen atom and a hydroxyl group, and also include an ester bond, an ether bond, a carbonyl bond, a sulfonyl bond, an imino bond and a sulfinyl bond. Further, these organic groups may contain a phosphate unit and a pyrophosphate unit. Two or more of these functional groups, bonds and units may be contained per silicon compound, and two or more of them may be contained per organic group.

Specific examples of the compounds of the general formula (II) include compounds of the following formula (II-i) to (II-vii).

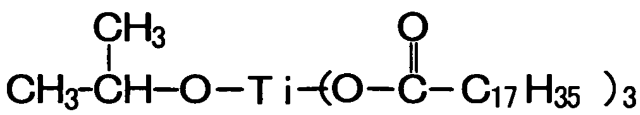

(II-i)

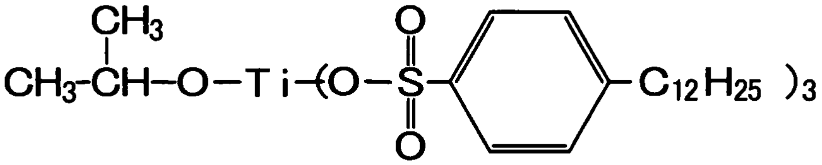 (II-ii)

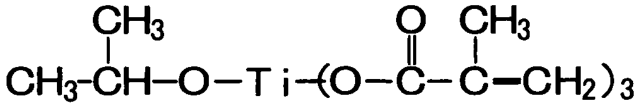 (II-iii)

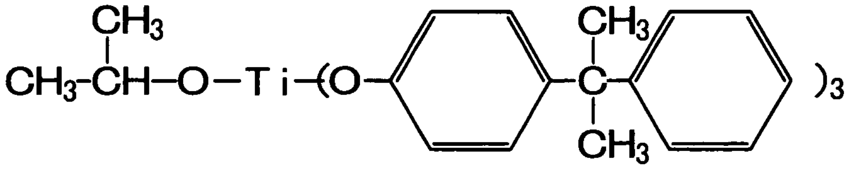 (II-iv)

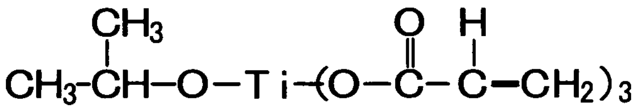 (II-v)

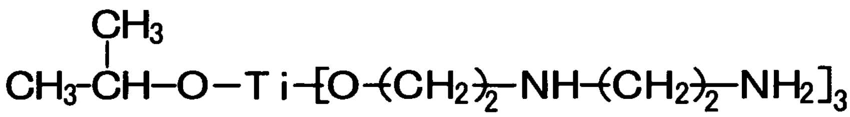 (II-vi)

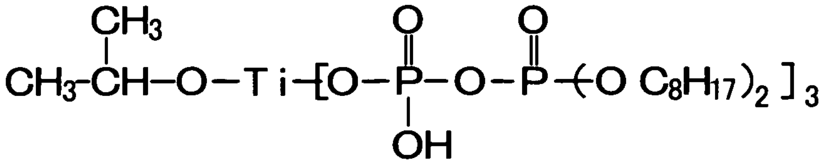 (II-vii)

The chelate organic titanate compound includes compounds of the following general formula (III).

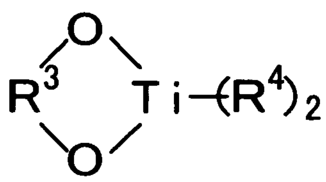

(III)

In the formula (III), $R^3$ is a divalent organic group having 1 to 6 carbon atoms, $R^4$ is a monovalent organic group having 4 to 20 carbon atoms.

The hydrocarbon as a source that leads to the organic groups represented by $R^3$ and $R^4$ may be any one of an aliphatic hydrocarbon, an alicyclic hydrocarbon and an aromatic hydrocarbon. Further, they may contain one or more unsaturated bonds (carbon-carbon double bond or triple bond)

Each organic group may contain various functional group and a bond containing a hetero atom. Examples of the functional groups and the bond include an amino group, an epoxy group, a carboxyl group, an amide group, a mercapto group, a nitro group, a nitroso group, a halogen atom and a hydroxyl group, and also include an ester bond, an ether bond, a carbonyl bond, a sulfonyl bond and a sulfinyl bond. Further, the organic groups may contain a phosphate unit and a pyrophosphate unit. Two or more of these functional groups, bonds and units may be contained per silicon compound, and two or more of them may be contained per organic group.

Specific examples of the compounds of the above general formula (III) include compounds of the following formulae (III-i) to (III-iv).

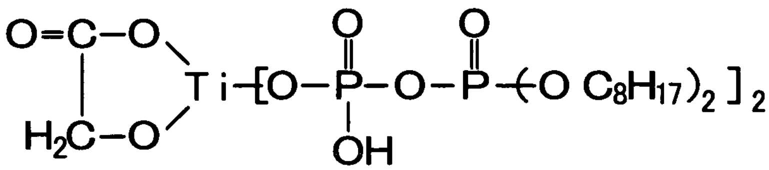

(III-i)

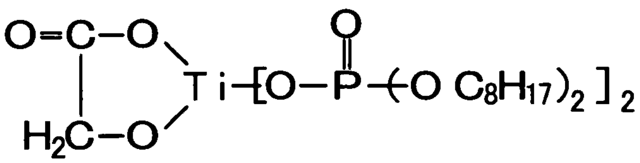

(III-ii)

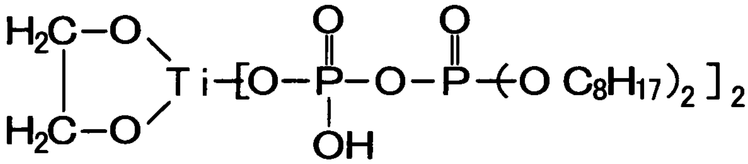

(III-iii)

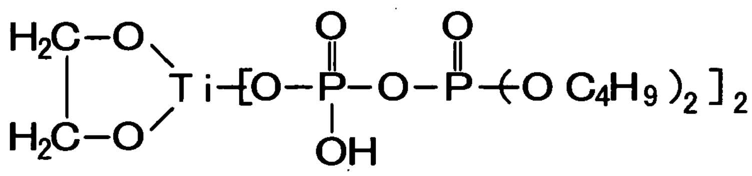

(III-iv)

Examples of the coordination type preferably include compounds of the following general formula (IV).

**$(R^5O)_4$—Ti · [P $(OR^6)_2$OH $]_2$ (IV)**

In the formula (IV), $R^5$ is an organic group having 1 to 20 carbon atoms and $R^6$ is an alkyl group having 4 to 20 carbon atoms.

The hydrocarbon as a source that leads to the organic group of $R^5$ may be any one of an aliphatic hydrocarbon, an alicyclic hydrocarbon and an aromatic hydrocarbon. Further, they may contain one or more unsaturated bonds (carbon-carbon double bond or triple bond). More specifically, examples of the organic group represented by $R^5$ include an alkyl group, an alkenyl group, a phenyl group, a naphthyl group and a cycloalkyl group.

The organic group may contain various functional group and a bond containing a hetero atom. Examples of the functional groups and the bond include an amino group, an epoxy group, a carboxyl group, an amide group, a mercapto group, a nitro group, a nitroso group, a halogen atom and a hydroxyl group, and also include an ester bond, an ether bond, a carbonyl bond, a sulfonyl bond and a sulfinyl bond. Two or more of these functional groups and bonds may be contained per silicon compound, and two or more of them may be contained per organic group.

The alkyl group having 4 to 20 carbon atoms, represented by $R^6$, includes methyl group, propyl group, isopropyl group, and the like.

Specific examples of the compounds of the general formula (IV) include compounds of the following formulae (IV-i) to (IV-iii).

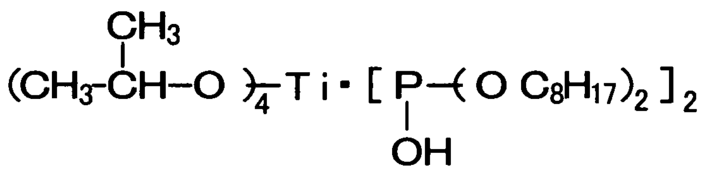

(IV-i)

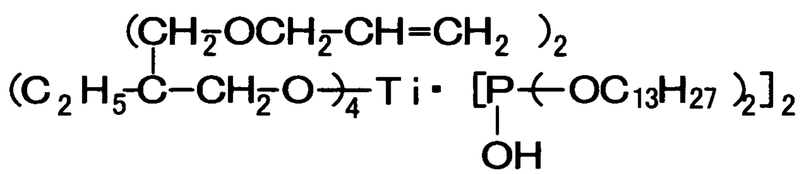

(IV-ii)

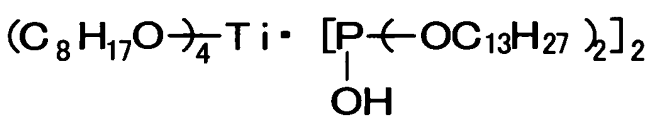

(IV-iii)

Each of the above organosilicon compound and organic titanate compound for Component B-1 is preferably a compound containing an amino group since such a compound has excellent affinity to the polycarbonate during a reaction. The above Components B-1 may be used alone or in combination of two or more of them.

<Preparation of silicate filler (Component B)>

Component B is preferably prepared by dispersing Component B-2 in a polar solvent and then adding Component B-1 to the resultant dispersion.

The polar solvent not only stands for water but also stands for an organic solvent compatible with water and a mixture of water with such an organic solvent. This organic solvent includes formamide, methylformamide, methanol, ethanol, isopropanol, ethylene glycol, propylene glycol, 1,4-butanediol, acetone, methyl ethyl ketone, diethyl ether tetrahydrofuran, N,N-dimethylformamide, N,N-dimethylacetamide and dimethylsulfoxde. Formamide and methylformamide are suitably used since the dispersibility of the lamellar silicate during mixing is not decreased.

When the weight ratio of Component B-2 to the polar solvent is too small, the dispersion of Component B-2 is insufficient, and when it is too large, the production efficiency will be poor, so that the weight ratio of Component B-2 to the polar solvent is preferably 0.00015 to 0.3, more preferably 0.0015 to 0.15.

The lamellar silicate (Component B-2) contains a silanol (Si-OH), so that the organosilicon compound and/or the organic titanate compound as Component B-1 can be easily introduced into Component B-2 by reacting the above silanol with these compounds. This reaction can be also carried out by the method of bringing the silicate compound or a solution thereof directly into contact with Component B-2 in a solid state. In this method, there can be used a high-speed stirrer typified by a Henschel mixer, a screw type mixer and various mechanochemical apparatuses.

However, it is more preferred to employ a method in which the organosilicon compound and/or the organic titanate compound are/is introduced into the lamellar silicate in a state where the lamellar silicate is swollen with a medium or more preferably in a state where it is dispersed in a medium. The lamellar silicate in the above state is in a state where each layer is fully separated or easily separable. Since it is thought that the silanol exists in an end portion of the lamellar silicate, Component B-1 can be introduced by causing Component B-1 to bond to each layer while maintaining the hydrophilic nature between its layers. It is thought that in this manner, a resin matrix comes to be bound as the aspect ratio is higher that each layer has in the layers of the lamellar silicate, and that more improved elasticity can be hence obtained.

The medium for swelling or dispersing the lamellar silicate is not specially limited so long as it is a polar solvent. However, water is preferably used since it can be most simply and easily handled and is excellent in the capability of separating the layers of the lamellar silicate. The organosilicon compound and/or the organic titanate compound are/is added directly, or a solution of one or both of these compounds in the polar solvent is added, to a dispersion of the lamellar silicate in water, whereby a reaction for introducing the silicon compound and/or the titanate compound can be carried out. In this reaction, an acid catalyst or a base catalyst, more preferably an acid catalyst, may be used for promoting the hydrolysis of the silicon compound and the titanate compound so that the reactivity is improved. While the above reaction generally proceeds fully at room temperature, the reaction system may be warmed as required. The highest temperature during the warming can be determined as required so long as it is less than the decomposition temperatures of the silicate compound and the titanate compound and is lower than the boiling point of water or a mixture of water with the polar solvent used in the reaction.

(Confirmation of introduction)

Completion of introduction of the organosilicon compound and/or the organic titanate compound (Component B-1) into the lamellar silicate (Component B-2) can be confirmed by various methods. For example, the following method can be employed for a confirming method. First, a lamellar silicate after surface-treated is cleaned with an organic solvent such as chloroform or dichloromethane and a polar solvent such as water or methanol. By this cleaning, an organosilicon compound and an organic titanate compound that are simply adsorbed on the lamellar silicate are removed. The thus-cleaned lamellar silicate from which the adsorbing substances are removed is fully dried. Then, the thus-prepared lamellar silicate is suspended in deuterium oxide. The suspension is measured by $^1$H-NMR, to confirm whether or not there are signals derived from the organosilicon compound and/or the organic titanate compound. Alternatively, the above confirmation can be made by fully mixing the lamellar silicate that is cleaned as described above with potassium bromide or the like in a predetermined amount ratio, forming a tablet of the mixture under pressure, and measuring the tablet for absorption bands derived from the silicon-containing compound or titanium-containing compound by a transmission method or the like using FT-IR.

Further, when the hydrolyzable group is an alkoxy group, the reaction state can be confirmed on the basis of whether or not it disappears. Further, the following TGA measurement is conducted, and the introduction amount can be determined on the basis of an amount ratio of an organic substance derived from Component B-1 introduced.

In Component B, the organosilicon compound and/or the organic titanate compound as Component B-1 are/is introduced into the lamellar silicate, whereby an organic substance derived from Component B-1 is introduced into the lamellar silicate. The content of the organic substance in Component B per 100 % by weight of Component B is preferably 0.1 to 50 % by weight, more preferably 1 to 30 % by weight. When the content of the organic substance is less than 0.1 % by weight, it is difficult to attain a suitable dispersion state of the silicate filler in the resin composition. When it exceeds 50 % by weight, such an amount is excessive and not economical. The above content of the organic substance in Component B is calculated on the basis of a weight loss value obtained when a dry sample of Component B is temperature-increased to 900°C at a temperature increase rate of 20°C/minute with TGA (Thermogravimetric Analysis) measuring apparatus in a nitrogen gas atmosphere and the temperature reaches 900°C. The above content of the organic substance is preferably satisfied in a state where the hydrolyzable group in Component B-1 is substantially not found. For example, when the hydrolyzable group is an alkoxy group, it can be confirmed on the basis of measurement of NMR derived from the alkoxy group whether or not the hydrolyzable group is present.

Preferably, the above organic substance is uniformly introduced into the lamellar silicate. The amount of the silicon compound, which is suitable for the above introduction, will change depending upon the surface area and form of the lamellar silicate (it is thought that the silanol required for the reaction is present on an end surface portion of the lamellar silicate). When the lamellar silicate suitable as Component B-2 in the present invention is taken into consideration, however, the above range is proper.

(Interfacial polycondensation reaction)

In the present invention, the interfacial polycondensation reaction is carried out in the substantial absence of the polymerization catalyst. The polymerization catalyst as used in the present invention refers to an amine compound, a quaternary ammonium salt compound and a quaternary phosphonium salt compound. The above amine compound literally refers to a compound obtained by replacing one or more hydrogen atoms of ammonia with hydrocarbon group (s). The amine compound therefore does not include the organosilicon compound as Component B-1-i and the organic titanate compound as Component B-1-ii which have, as a functional group, an ammonia substitution unit such as an amino group. The substantial absence means that the amount of the polymerization catalyst per mole of the dihydric phenol that leads to the polycarbonate as Component A is preferably less than $0.5 \times 10^{-4}$ mol, more preferably $1 \times 10^{-8}$ mol.

The interfacial polycondensation reaction is preferably carried out in an emulsified state.

The interfacial polycondensation reaction is preferably carried out after the mixture of Component B with the polar solvent is added to the polymer precursor for Component A.

When the silicate filler (Component B) is added to the polymer precursor, the silicate filler may be in a solid state or may be in a state where it is dispersed in various dispersing media. Since the reaction system of the interfacial polymerization has an aqueous phase, the silicate filler comes to be separated or easily separable while it is contained in the aqueous phase. However, a method in which the lamellar silicate is dispersed in the polar solvent beforehand and the dispersion is added to the polymer precursor is more preferred since a uniformly mixed state can be obtained for a short period of time. That is, preferably, a mixture of Component B with the polar solvent is added to the polymer precursor for Component A and then the interfacial polycondensation reaction is carried out. In particular, it is preferred to employ a method of using as the above polar solvent, water that is present in the reaction system where the polymer precursor is synthesized. That is, there is preferably employed a method in which water in the above reaction system is once withdrawn, the silicate filler is dispersed in the water and the thus-obtained dispersion is brought back to the reaction system again. According to this method, the resin composition can be more efficiently produced. <Production procedures of resin composition>

The resin composition of the present invention can be produced by the following procedures.

(I) Step of reacting the dihydric phenol which lead to a structural unit for Component A and the carbonate precursor in the presence of an acid binder, an organic solvent and water to obtain a polymer precursor (step-i),
(II) Step of adding a mixture of Component B with a polar solvent to the thus-obtained polymer precursor to obtain a liquid mixture (step-ii),
(III) Step of causing a shear force to act on the thus-obtained liquid mixture to bring the liquid mixture into an emulsified state and then subjecting the polymer precursor in the emulsified state to interfacial polycondensation reaction (step-iii), and
(IV) Step of separating the organic solvent and water from the reaction mixture to obtain a resin composition in a solid state (step-iv).

(Step-i)

The step-i is a polymer precursor synthesis step. It is a step in which components such as the above dihydric

phenol, etc., are reacted to obtain the polymer precursor.

(Step-ii)

The step-ii is the step of adding Component B. Component B may be added to the reaction system when the step-i is initiated. Since, however, it is sometimes difficult to control the reaction condition, it is preferred to carry out the above addition after the step-i. Further, it is preferred to add Component B in the form of a dispersion thereof in a polar solvent. As a polar solvent, it is preferred to withdraw water in the step-i and use it.

In the production process of the present invention, a conventional technique of interfacial polycondensation reaction for a polycarbonate can be used. For example, an acid binder typified by sodium hydroxide is generally additionally added after the step of forming the polymer precursor. That is, there is widely known a method in which a phosgene-forming reaction is carried out at a relatively low pH value and then the pH value is increased to conduct the reaction. The present invention can utilize such a technique. Similarly, there is also known, for example, a technique of additionally adding a dihydric phenol after emulsification, and the present invention can also utilize such a technique.

(Step-iii)

The step-iii is a polycondensation reaction step. This step is carried out after the step-ii, or when a step-$\alpha$ to be described later is included, it is preferably carried out after the step-ii and the step-$\alpha$ are completed, while it may be carried out before they are completed. That is, the step-ii or the step-$\alpha$ may be carried out with stirring. Like general interfacial polycondensation for a polycarbonate, this reaction is preferably carried out in a state where the liquid mixture that is a reaction system has been brought into an emulsified state. In this manner, the reaction rate can be increased.

The emulsified state can be generated by causing a shear force to act on the liquid mixture. As means for causing the shear force to act, a mixer is used. The mixer may be any one of a static mixer, line mixers such as a porous membrane type emulsion production apparatus and various mixers with stirrers. Typical examples of the stirring blade of the stirrer include a propeller, a paddle and a ribbon blade, and the stirrer includes homogenizers having rotors and stators having various forms and a homomixer.

In the above polycondensation, the reaction system preferably has a pH value of 9 or more. The reaction temperature is preferably in the range of 20 to 40°C, more preferably 25 to 35°C. Further, the reaction time period is preferably 0.35 to 10.5 hours, more preferably 0.55 to 5.5 hours, still more preferably 1.05 to 3.5 hours.

The step-iii is preferably a step in which the liquid mixture that is brought into an emulsified state is caused to undergo interfacial polycondensation reaction without substantially causing the shear force to act thereon.

In the present invention, preferably, the emulsified state is generated by causing the shear force to act as described above, and then the interfacial polycondensation reaction is allowed to proceed in the emulsified state. In the present invention, however, if the silicate filler (Component B) is present in the reaction system, the emulsified state is easily destabilized as the reaction proceeds. Therefore, if the action of the shear force is continued, the association degree of a dispersion phase is increased more greatly than the dispersion of a phase, and the emulsified state comes to be destroyed. The present inventors have found that in the interfacial polycondensation in the presence of Component B for forming a polycarbonate, an excellent emulsified state, which is once generated, is rather maintained without substantially causing the shear force to act.

Further, it has been conventionally thought that the action of a shear force is required for uniformly dispersing a lamellar silicate in a polycarbonate resin. However, having remarkably high elasticity over a conventional polycarbonate resin composition containing a lamellar silicate, the polycarbonate resin composition obtained according to the present invention produces effects that are not at all inferable from conventional knowledge.

The above "without substantially causing the shear force to act" means that the action of the shear force, more specifically the action of a mixer, is stopped during the reaction, in a manner in which the emulsified state can be maintained. Therefore, it does not mean the preclusion, for example, of such a shear force as is generated when a mixture flows inside a general smooth tube and the stirring that is carried out as slowly as the interface between two separated phases can be maintained.

The time period for causing the shear force to act with a mixer to bring about the emulsified state in the step is preferably 1 to 30 minutes, more preferably 3 to 20 minutes. The time period for carrying out the interfacial polycondensation reaction while the above action is stopped is preferably 0.3 to 10 hours, more preferably 0.5 to 5 hours, still more preferably 1 to 3 hours.

That is, the step-iii is preferably a step in which, after the step-ii or after the step-ii and the step-$\alpha$ if the step-$\alpha$ is included, the shear force is caused to act on the obtained liquid mixture with a mixer to bring the liquid mixture into an emulsified state for 1 to 30 minutes, then, the action of the mixer is stopped to maintain the emulsified state without substantially causing the shear force to act, and in this emulsified state, the polymer precursor is caused to undergo the interfacial polycondensation for 0.3 to 10 hours.

(Step-iv)

The step-iv is a step in which a resin composition in a solid state is taken out of a mixture obtained by the reaction. This mixture contains a polycarbonate generated by the reaction, silicate filler, organic solvent and water as main components, and besides these, it contains a small amount of impurities such as a salt compound by-produced by the reaction and unreacted raw materials. The step-iv is a step in which at least the organic solvent and water are separated from the above mixture and the resin composition in a solid state is obtained.
The mixture obtained by the reaction is a gel-like mixture when the reaction proceeds smoothly as will be described later. It is therefore required to separate the organic solvent and water included in the gel-like mixture from the gel-like mixture. For the above separation, it is preferred to employ a method in which an external force is exerted on the gel-like mixture with a suction filter, a compressor, a vibrator or a centrifugal separator. As other separation method, a method in which the organic solvent and water are evaporated by heating or reducing the pressure (including freeze-drying) can be an example. For the heating, microwave heating can be utilized. According to the above method, the resin composition can be more efficiently produced.
In the step-iv, preferably, the organic solvent and water are separated from the mixture obtained by the reaction, and the separated residue is washed with water to obtain the resin composition in a solid state.
In the step-iii, when the reaction suitably proceeds, the liquid mixture is gelled and a gel-like mixture is finally generated. It is thought that the above gel is formed because the polycarbonate forms a pseudo-crosslinked structure through the silicate filler (Component B) as described above. It is thought that the organic solvent is contained in the polycarbonate side, and water is contained in the silicate filler side, so that a balance between the phases is maintained. On the other hand, the silicate filler that does not take part in the above crosslinking is not brought into a state where it is fully taken into the polycarbonate, and it is dissociated by a later washing step, or the like.
In the present invention, therefore, the mixture obtained after the step-iii is preferably in the form of a gel. The method of separating the organic solvent and water from the gel-like mixture containing them is as described above. The resin composition obtained by the separation still contains impurities such as a salt compound, unreacted raw material, and the like. They impair the thermal stability of the polycarbonate resin composition. It is therefore preferred to remove the above impurities as much as possible by washing the resin composition with water, for more improving the resin composition of the present invention in thermal stability. By washing the above resin composition with water, a polycarbonate resin composition excellent in thermal stability can be obtained.

(Step-$\alpha$)

After the step-i and before the step-iii, it is preferred to add the step (step-$\alpha$) of adding a monovalent phenol as a terminal stopper to the polymer precursor.
The step-$\alpha$ is not essential in the present invention. However, it is preferred to add the terminal stopper to carry out the reaction, since the controlling of molecular weight of the polycarbonate is made easy, and since the obtained resin composition is improved in thermal stability. Further, the terminal stopper is preferably added after the step-i. When the step-$\alpha$ is included, any one of the step-ii and the step-$\alpha$ may be carried out first or may be carried out at the same time. By adding the terminal stopper, the molecular weight is controlled, and a resin composition excellent in thermal stability can be obtained.

<Resin composition>

According to the present invention, there is obtained a resin composition comprising 100 parts by weight of an aromatic polycarbonate (Component A) and 0.01 to 50 parts by weight of a silicate filler

(Component B),

(I) Component B being a silicate filler prepared by introducing at least one compound (Component B-1) selected from (i) an organosilicon compound (Component B-1-i) containing a hydrolyzable group and/or a hydroxyl group bonded to a silicon atom and (ii) an organic titanate compound (Component B-1-ii) into a lamellar silicate (Component B-2) having an cation exchange capacity of 50 to 200 milliequivalents/100 g.
The content of Component B in the resin composition per 100 parts by weight of Component A is 0.01 to 50 parts by weight, preferably 0.05 to 20 parts by weight, more preferably 0.05 to 15 parts by weight. When the content of Component B is less than the above lower limit, the resin composition does not fully exhibit effects for improving mechanical properties or dimensional accuracy. When it exceeds the above upper limit, the thermal stability is liable to decrease, so that the resin composition is poor in general-purpose properties. On the other hand, the present invention has a characteristic feature that remarkably high elasticity is exhibited with a small content of Component B.

When the total amount of the resin composition of the present invention is 100 % by weight, the lower limit of the content of the lamellar silicate (Component B-2) is preferably 0.01 % by weight, more preferably 0.1 % by weight, still more preferably 0.5 % by weight. The upper limit of the above content is preferably 30 % by weight, more preferably 15 % by weight, still more preferably 12 % by weight.
The storage elastic modulus (Y (MPa)) of the resin composition at 40°C is preferably 2,500 MPa or more, more preferably 2,500 to 10,000 MPa.
When the content of an inorganic compound calculated from a weight ratio of an ashed residue after the resin composition is treated at 600°C in an electric furnace for 6 hours is X % by weight, and when the storage elastic modulus of the resin composition at 40°C is Y (MPa), the resin composition preferably satisfies the following expression (1).

$$400X + 1,500 \leq Y \leq 1,400X + 1,500 \qquad (1)$$

Such a resin composition has high elasticity although it has a small content of an inorganic filler. In the present invention, the content (X % by weight) of the inorganic compound corresponds to the content of Component B-2.
The value of the storage elastic modulus Y as used herein refers to a value that is measured in a strain and frequency region where the linearity of response is secured, with a dynamic viscoelasticity measuring apparatus. One example of this measurement is a method in which the measurement is conducted using a resonance frequency mode with means of a dynamic viscoelasticity measuring apparatus, DMA 983 model supplied by TA Instruments Corp.

<Other additional component>

The resin composition of the present invention may contain other additives different from the above Components as an additional component as required. Such an additive may be added to the resin composition obtained by the process of the present invention after the reaction, or may be incorporated at any stage during the reaction. Further, one additive is added during the reaction, and the same additive may be again added when the obtained resin composition is melt-kneaded. An additive is added during the reaction under the condition of no impairment of the reaction, so that the additive to be added during the reaction preferably includes various stabilizers that are used in a relatively small amount, such as a thermal stabilizer, an antioxidant and an ultraviolet absorbent.
In the resin composition of the present invention, a resin composition obtained by the interfacial polycondensation reaction can be directly shaped into a desired form by a melting method or a casting method (that is, the content of the lamellar silicate in the shaped article is equivalent to that of the resin composition obtained by the polycondensation reaction). On the other hand, the resin composition obtained by the interfacial polycondensation reaction can be mixed with other polycarbonate, other resin or various additives during melt-kneading thereof or in a solution or dispersion, and then the mixture can be used for shaping by a melting method or a casting method.

<Additional component: polymer>

The polymer that can constitute the above additional component includes various resins and elastomers. Examples of the resins include an aromatic polyester resin, an aliphatic polyester resin, a polyamide resin, a polyimde resin, a polyether imide resin, a polyurethane resin, a silicone resin, a polyphenylene ether resin, polyphenylene sulfide resin, a polysulfone resin, polyolefin resins such as polyethylene, polypropylene, etc., a styrene resin, a polymethacrylate resin, a phenolic resin and an epoxy resin.
Examples of the elastomers include isobutylene/isoprene rubber, styrene/butadiene rubber, ethylene/propylene rubber, an acrylic elastomer, a polyester elastomer, a polyamide elastomer, MBS (methyl methacrylate/styrene/butadiene) rubber that is a core-shell type elastomer and MAS (methyl methacrylate/acrylonitrile/styrene) rubber.
The styrene resin is preferably selected from polystyrene (PS) (including syndiotactic polystyrene), high-impact polystyrene (HIPS), an acrylonitrile-styrene copolymer (AS resin), a methyl methacrylate-butadienestyrene copolymer (MBS resin) and an acrylonitrile-butadiene-styrene copolymer (ABS resin), and of these, ABS resin is the most preferred. These styrene resins may be used as a mixture of two or more members of these.
The aromatic polyester resin is selected from polyethylene terephthalate (PET), polypropylene terephthalate, polybutylene terephthalate (PBT), polyhexylene terephthalate, polyethylene-2,6-naphthalate (PEN), polybutylene naphthalate (PBN) and polyethylene-1,2-bis(phenoxy)ethane-4,4'-dicarboxylate, and in addition to these, it can be also selected from copolyesters such as polyethylene terephthalate obtained by copolymerization with 1,4-cyclohexanedimethanol (so-called PET-G), polyethylene isophthalate/terephthalate and polybutylene terephthalate/isophthalate. Of these, polyethylene terephthalate and polyethylene-2,6-naphthalate are preferred. Further, when it is required to balance moldability and mechanical properties, polybutylene terephthalate and polybutylene naphthalate are preferred, and a blend

or copolymer having a polybutylene terephthalate/polyethylene terephthalate weight ratio in the range of from 2 to 10 is more preferred. While the molecular weight of the aromatic polyester resin is not critical, the aromatic polyester resin has an intrinsic viscosity, measured at 35°C in o-chlorophenol as a solvent, of 0.4 to 1.2, preferably 0.6 to 1.15.

In addition, it is known, for example, in International Publication pamphlet WO03/010235 that when a compound having affinity to the polycarbonate resin and having a hydrophilic component is incorporated into a polycarbonate resin composition containing a so-called swelling lamellar silicate, the lamellar silicate is well dispersed and the resin composition has excellent rigidity. In the present invention, such a compound may be incorporated, and the details thereof are as described in the above Publication.

Above all, an acidic-group-containing compound is preferably used in that the resin composition is improved in thermal stability. Further, a styrene polymer having carboxyl group and derivative thereof, in particular a styrene-maleic anhydride copolymer, is especially preferably used.

<Additional component: additive>

The resin composition of the present invention may contain, as required, a mold release agent (e.g., aliphatic ester, polyolefin wax, silicone compound, fluorine oil), a flame retardant (e.g., brominated epoxy resin, brominated polystyrene, brominated polycarbonate, brominated polyacrylate, monophosphate compound, phosphate oligomer compound, phosphonate oligomer compound, phosphonitrile oligomer compound, phosphonic acid amide compound, organic phosphonic acid alkali (alkaline earth) metal salt, silicone-based flame retardant), flame retardant aids (e.g., sodium antimonite, antimony trioxide), an anti-dripping agent (typified by polytetrafluoroethylene having fibril-forming capability), an antioxidant (e.g., hindered phenol compound, sulfur-containing antioxidant), an ultraviolet absorbent, a light stabilizer, a mold release agent, a sliding agent (e.g., PTFE particles, high-molecular weight polyethylene particles), a colorant (e.g., pigments such as carbon black and titanium oxide, and dyes), a light-diffusing agent (e.g., acryl crosslinked particles, silicone crosslinked particles, very thin glass flakes, calcium carbonate particles), an inorganic phosphor (e.g., phosphor having aluminate as a host crystal), an antistatic agent, a conducting agent (e.g., carbon black, vapor-phase-grown carbon fiber, carbon nano-tube), a flow modifier (polycaprolactone, styrene oligomer), an inorganic or organic anti-fungus agent, a photocatalyst stain-proofing agent (titanium oxide fine particles, zinc oxide fine particles), an infrared absorbent (ATO fine particles, ITO fine particles, lanthanum boride fine particles, tungsten boride fine particles, phthalocyanine metal complex), a photochromic agent and a fluorescent whitener.

Examples of the above dyes preferably include a perylene dye, a coumarin dye, a thioindigo dye, an anthraquinone dye, a thioxanthone dye, a ferrocyanide such as iron blue, a perinone dye, a quinoline dye, a quinacridone dye, a dioxazine dye, an isoindolinone dye and a phthalocyanine dye. Further, examples thereof further include various fluorescent dyes typified by an anthraquinone dye, a perylene dye, a coumarin dye, a thioindigo dye and a thioxanthone dye. Further, examples of the fluorescent whitener include a bisbenzoxazolyl-stilbene derivative, a bisbenzoxazolyl-naphthalene derivative, a bisbenzoxazolyl-thiophene derivative and a coumarin derivative. Of these, a coumarin derivative is particularly preferably used. An example of commercially available product of the coumarin derivative is HAKKOL PSR (trade name) supplied by Hakko Chemical K.K. The content of the fluorescent whitener per 100 parts by weight of Component A is preferably 0.0005 to 1 part by weight, more preferably 0.001 to 0.1 part by weight.

As a titanium oxide, titanium dioxide that is a white pigment is particularly preferred. The titanium dioxide is preferably surface-treated with an oxide of a metal such as aluminum, silicon, titanium, zirconium, antimony, tin or zinc. For the surface treatment, any one of high-density treatment and low-density (porousness) treatment can be applied. The titanium dioxide is more preferably surface-treated with an organic compound. The agent for this surface treatment can be selected from surface treating agents composed mainly of amine compounds, a silicone compound and a polyol compound. A titanium dioxide coated with alkyl hydrogen polysiloxane is particularly preferred. When the titanium dioxide is used as a general colorant, it is used in an amount of at least 0.001 but less than 3 parts by weight per 100 parts by weight of Component A. When the titanium dioxide is used in a relatively large amount for imparting a molded article with light-reflection properties, the amount of the titanium oxide per 100 parts by weight of Component A is preferably 3 to 30 parts by weight, particularly preferably 7 to 18 parts by weight.

Examples of the ultraviolet absorbent that can be incorporated into the resin composition of the present invention include a benzophenone ultraviolet absorbent, a benzotriazole ultraviolet absorbent, a hydroxyphenyl triazine ultraviolet absorbent, a cyclic imino ester ultraviolet absorbent and a cyanoacrylate ultraviolet absorbent, and any one of these can be used. Specific examples of the benzotriazole ultraviolet absorbent include 2-(2-hydroxy-5-tert-octylphenyl)benzotriazole, 2-(2-hydroxy-3,5-dicumylphenyl)phenylbenzotriazole and 2,2'-methylenebis[4-(1,1,3,3-tetramethylbutyl)-6-(2H-benzotriazol-2-yl)phenol]. Examples of the hydroxyphenyl triazine ultraviolet absorbent include 2-(4,6-diphenyl-1,3,5-triazin-2-yl)-5-hexyloxyphenol and 2-(4,6-bis(2,4-dimethylphenyl)-1,3,5-triazin-2-yl)-5-hexyloxyphenol. Examples of the cyclic imino ester ultraviolet absorbent include 2,2'-p-phenylenebis(3,1-benzoxazin-4-one) and 2,2'-(4,4'-diphenylene)bis(3,1-benzoxazin-4-one). An example of the cyanoacrylate ultraviolet absorbent is 1,3-bis[(2'-cyano-3',3'-diphenylacryloyl)oxy]-2,2-bis[(2-cyano-3,3-diphenylacryloyl)oxy]methy)propane.

Having a structure of a radical-polymerizable monomer compound, the above ultraviolet absorbent may be a polymer type ultraviolet absorbent obtained by copolymerization of this ultraviolet absorbent monomer and/or a light stabilizer monomer together with a monomer such as alkyl (meth)acrylate. Examples of the above ultraviolet absorbent monomer preferably include compounds containing a benzotriazole structure, a benzophenone structure, a triazine structure, a cyclic imino ester structure and a cyanoacrylate structure in an ester substituent of a (meth)acrylic ester. Of these, a benzotriazole ultraviolet absorbent and a hydroxyphenyl triazine ultraviolet absorbent are preferred in view of ultraviolet absorbing capability, and a cyclic imino ester ultraviolet absorbent and a cyanoacrylate ultraviolet absorbent are preferred in view of heat resistance and a hue (transparency). The above ultraviolet absorbents may be used singly or as a mixture of two or more members of them. The amount of the ultraviolet absorbent per 100 parts by weight of Component A is 0.01 to 2 parts by weight, particularly preferably 0.05 to 0.5 part by weight. The resin composition of the present invention may further contain a hindered amine light stabilizer. The amount of the light stabilizer per 100 parts by weight of Component A is preferably 0.0005 to 3 parts by weight.

The resin composition of the present invention preferably contains a phosphorus-containing thermal stabilizer. This phosphorus-containing thermal stabilizer includes phosphoric esters such as trimethyl phosphate, phosphorous acid esters such as triphenyl phosphite, trisnonylphenyl phosphite, distearyl pentaerythritol diphosphite, bis(2,6-di-tert-butyl-4-methylphenyl)pentaerythritol diphosphite, tris(2,4-di-tert-butylphenyl)phosphite, 2,2-methylenebis(4,6-di-tert-butylphenyl)octyl phosphite and bis(2,4-di-tert-butylphenyl)pentaerythritol diphosphite and phosphonous acid esters such as tetrakis(2,4-di-tert-butylphenyl)-4,4'-biphenylene diphosphonite. The amount of the above phosphorus-containing thermal stabilizer contained in the composition, per 100 % by weight of the total amount of the composition, is preferably 0.001 to 1 % by weight, more preferably 0.01 to 0.5 % by weight, still more preferably 0.01 to 0.2 % by weight. By incorporating the above phosphorus-containing thermal stabilizer, the resin composition is further improved in thermal stability, and excellent molding properties can be attained.

Further, when the resin composition of the present invention contains a hindered phenol antioxidant, the content thereof is preferably in the same range as those specified with regard to the above phosphorus-containing thermal stabilizer.

In the present invention, for improving the hydrolysis resistance, there can be also incorporated a compound that is conventionally known as a hydrolysis modifier for an aromatic polycarbonate resin, unless the object of the present invention is impaired. Examples of this compound include an epoxy compound, an oxetane compound, a silane compound and a phosphonic acid compound, and in particular, an epoxy compound and an oxetane compound are preferred. Examples of the epoxy compound preferably include alicyclic epoxy compounds typified by 3,4-epoxycyclohexylmethyl-3',4'-epoxycyclohexyl carboxylate and silicon-atom-containing epoxy compounds typified by 3-glycidylpropoxy-triethoxysilane. The amount of such a compound as a hydrolysis improver is preferably limited to 1 part by weight or less per 100 parts by weight of Component A.

<Method for producing resin composition containing additional component>

The resin composition obtained according to the present invention can be melt-kneaded together with the above additional component, so that the additional component can be incorporated into the resin composition, and this method is more preferred from the viewpoint of production efficiency.

In a specific method for the above melt-kneading, there is employed a Banbury mixer, a kneading roll or an extruder, and above all, from the viewpoint of kneading efficiency, an extruder is preferred, and a multiple-screw extruder such as a twin-screw extruder is more preferred. A more preferred embodiment of the twin-screw extruder is as follows. Concerning a screw form, threaded screws such as a single threaded screw, a double threaded screw and a triple threaded screw can be used, and a double threaded screw having the capability of molten resin carrying and the capability of shear kneading in wide applications can be preferably used. In the twin-screw extruder, the ratio (L/D) of the length (L) and diameter (D) of the screw is preferably from 20 to 45, more preferably from 28 to 42. As L/D increases, it is easier to attain a homogeneous dispersion. When L/D is too large, the resin is liable to be decomposed due to thermal deterioration. The screw is required to have at least one kneading zone composed of a kneading disk segment (or a kneading segment corresponding thereto) for improving the capability of kneading. The screw preferably has 1 to 3 kneading segments.

Further, it is preferred to use an extruder having a vent capable of discharging water in a raw material and a volatilization gas generated from a resin that is melt-kneaded. It is preferred to provide a vacuum pump for efficiently discharging generated water and volatilization gas through the vent from the extruder. A screen for removing foreign matter included in a feed material can be provided in a zone before an extruder die portion so that the foreign matter can be removed from the resin composition. The screen includes a wire mesh, a screen changer and sintered metal plates (disk filter. etc.).

The method for feeding the additional component (additive) to an extruder is not specially limited, while typical examples thereof include the following methods. (i) A method in which an additive is supplied into an extruder independently of an aromatic polycarbonate resin obtained after the reaction (to be referred to as "resin composition" in these instances hereinafter). (ii) A method in which an additive and a resin composition are pre-mixed with a high-speed stirrer typified by a Henschel mixer and then the mixture is fed to an extruder. In this method, all of necessary raw materials may be pre-mixed, or a master agent containing a high concentration of an additive may be used. The master agent may have the form of a powder, or it may also have a form prepared by compression-granulating such a powder. Further, as other pre-mixing means, for example, a Nauta mixer, a twin-shell blender, a mechanochemical apparatus and an extrusion mixer are available. (iii) A method in which an additive and a resin composition are pre-mixed and palletized to prepare master pellets.

A resin extruded from the twin-screw extruder is directly cut to form pellets (so-called hot cutting), or formed into strands and the strands are cut with a pelletizer to form pellets. When it is required to reduce the influence caused by external dust, etc., it is preferred to clean an atmosphere around the extruder.

<Molded article>

Various molded articles can be obtained by injection-molding pellets of the resin composition, or the resin composition containing the additional component, which is obtained by the present invention. In the above injection molding, molded articles can be obtained not only by a usual molding method but also by molding methods depending upon purposes as required, such as an injection compression molding method, an injection press molding method, a gas-assisted injection molding method, an expansion molding method (including a method according to the injection of a supercritical fluid), an insert molding method, an in-mold coating molding method, an insulated runner molding method, a forced heating and cooling molding method, a two-color molding method, a sandwich molding method and an ultrahigh speed injection molding method. Advantages of these various molding methods are already well known. For the molding, any one of a cold runner mode and a hot runner mode can be selected.

Further, the resin composition of the present invention can be used by extrusion molding to produce various contour extrusion molded articles, sheets and films. Further, for forming sheets and films, an inflation method, a calendering method and a casting method can be used. It can be also molded to form a heat-shrinkable tube by applying a certain stretching procedure. Further, molded articles can be obtained from the resin composition of the present invention by rotational molding or blow molding.

Further, various surface treatments can be applied to a molded article formed of the resin composition of the present invention. The "surface treatments" as used herein are carried out for forming a new layer on the surface layer of a resin molded article by vapor deposition (physical vapor deposition, chemical vapor deposition), plating (electric plating, electroless plating, a melt plating), application, coating, printing or the like. A general method used for polycarbonate resins can be applied. Examples of the surface treatments specifically include various surface treatments for hard coating, water-repellent-oil repellent coating, ultraviolet absorbent coating, infrared absorption coating and metallizing (vapor deposition). Since the resin composition of the present invention has excellent surface flatness and smoothness and high elasticity, plating and metallizing are particularly preferred surface treatments.

Effect of the Invention

According to the present invention, the polymer precursor for the aromatic polycarbonate (Component A) is caused to under go interfacial polycondensation in the presence of the specified silicate filler (Component B) and in absence of the polymerization catalyst, whereby the high-elasticity resin composition can be produced with a relatively small amount of Component B incorporated.

Further, the polycondensation reaction is carried out in an emulsified state without stirring and without causing a shear force to act, whereby the resin composition containing the aromatic polycarbonate having a narrow molecular weight distribution can be obtained.

Examples

The present invention will be explained in detail hereinafter with reference to Examples, while the present invention shall not be limited thereto. In Examples, various properties were evaluated by the following methods.

(i) Weight average molecular weight

About 10 mg of an aromatic polycarbonate resin composition obtained by an interfacial polycondensation reaction was dissolved in about 7 g of chloroform. The resultant liquid was filtered with a 0.5 μm filter (DISMIC 25JP050AN) to remove insoluble matter. A polycarbonate in a solution obtained by the filtering was measured for a weight average molecular weight with a GPC measuring apparatus supplied by WATERS. An atmosphere in which the apparatus was placed was in a clear air environment having a temperature of 23°C and a relative humidity of 50 %. An SEC

column "MIXED-D" (length 300 mm, internal diameter 7.5 mm) supplied by Polymer Laboratory Corp. was used as a column, chloroform was used as a mobile phase, Easi Cal PS-2 (reference polystyrene) supplied by Polymer Laboratory Corp. was used as a reference material, and a differential diffractometer was used as a detector. Into the GPC measuring apparatus was injected 100 μl of the solution obtained after the above filtering, and GPC measurement was conducted under conditions including a column temperature of 35°C and a flow rate of 1 ml/minute. With regard to the thus-obtained data, a base line was determined by connecting the leading edge of a chart and the convergence point thereof, and a weight average molecular weight was calculated.

(ii) Content of lamellar silicate (inorganic content)

A lamellar silicate in an aromatic polycarbonate resin composition obtained by an interfacial polycondensation reaction was measured for its content by procedures similar to the method A of JIS K7052. That is, a resin composition in the form of a powder, obtained by a reaction, was dried in a hot air dryer at 110°C for 5 hours and allowed to cool in a desiccator. The thus-dried powder was placed in a crucible and treated in an electric furnace at 600°C for 6 hours, and allowed to cool in the desiccator. The resultant ashed residue in the crucible was weighed to calculate a content (% by weight) of the lamellar silicate (inorganic content) in the resin composition.

(iii) Measurement of storage elastic modulus (Y)

The measurement of a storage elastic modulus (Y) at 40°C was conducted according to the following procedures.

(iii-1) Preparation of test piece

A powder of an aromatic polycarbonate resin composition obtained by an interfacial polycondensation reaction was dried in a hot air dryer at 110°C for 5 hours. The dried powder was hot press molded with a hot pressing machine (a mini test press MP-2FH, supplied by Toyo Seiki K.K.) under conditions including a molding temperature of 240°C, a molding press of 5 MPa and a holding time period of 5 minutes, to obtain a test piece having a length of 60 mm, a width of 7 mm and a thickness of 1.5 mm.

(iii-2) Measurement of storage elastic modulus (Y)

The measurement of a storage elastic modulus (Y (MPa)) at 40°C was conducted using a resonant frequency mode with a DMA 983 type dynamic viscoelasticity measuring apparatus supplied by TA Instruments Corp. The following raw materials were used.

(Component B and other components)

(B-I: Silicate filler prepared by the following method)

100 Grams of synthesized saponite having an average particle diameter of 0.5 μm (Smecton SA (trade name): supplied by Kunimine Industries Co., Ltd., cation exchange capacity: 71.2 milliequivalents/100 g) was suspended in 10 liters of ion-exchanged water. To the suspension was added 10 g of 3-aminopropyltrimethoxysilane (KBM-903 (trade name): supplied by The Shin-Etsu Chemical Co., Ltd.), and the mixture was stirred for 1 hour and then subjected to centrifugal separation. The resultant solid content was washed with water three times to give a white solid. This solid was dried at 100°C for 5 hours to give a surface-treated silicate filler (B-I).

A sample for TAG measurement was prepared from the above dried silicate filler. By means of Hi-Res TGA2950 thermogravimetric analyzer supplied by TA-Instruments Corp., this sample was temperature-increased up to 900°C at a temperature elevation rate of 20°C/minute in $N_2$ atmosphere, a weight loss at 900°C was measured, and a measurement value was used as a ratio of an organic substance derived from a silane compound in the silicate filler. This ratio was 10 % by weight.

(B-II: Silicate filler prepared by the following method)

100 Grams of synthesized mica (Somasif ME-100 (trade name): supplied by CO-OP CHEMICAL CO., LTD., cation exchange capacity: 115 milliequivalents/100 g) having an average particle diameter of 5 μm was suspended in 10 liters of ion-exchanged water. To the suspension was added 10 g of 3-aminopropyltrimethoxysilane (KBM-903 (trade name): supplied by The Shin-Etsu Chemical Co., Ltd.), and the mixture was stirred for 1 hour and then subjected to centrifugal separation. The resultant solid content was washed with water three times to give a white solid. This solid was dried at 100°C for 5 hours to give a surface-treated silicate filler (B-II). The ratio of an organic substance, which was calculated on the basis of a TGA weight loss ratio measured like B-1, was 10 % by weight.

(B-III: Commercially available synthesized saponite for comparison)

Synthesized saponite having an average particle diameter of 0.5 μm (Smecton SA (trade name): supplied by Kunimine Industries Co., Ltd., cation exchange capacity: 71.2 milliequivalents/100 g).

(B-IV: Synthesized-mica-containing resin for comparison, prepared by the following method)

43.5 Parts by weight of synthetic mica (MAE210 (trade name): supplied by CO-OP CHEMICAL CO. LTD., cation exchange capacity of the synthetic mica before organization treatment: 115 milliequivalents/100 g), which was ion-exchanged (subjected to so-called organization treatment) with organic onium ion (didecyldimethylammonium ion), and 56.5 parts by weight of maleic-anhydride-modified styrene (DYLARK 332-80 (trade name): supplied by Nova Chemical (Japan) Ltd.) were melt-extruded in the form of strands with a vented twin-screw extruder at a cylinder temperature of 240°C and at a die temperature of 260°C while the vacuum degree in a vent portion was maintained at 27 kPa, and the strands were cut to prepare pellets.

(B-V: Silicate filler prepared by the following method)

100 Grams of synthesized mica (Somasif S1ME (trade name): supplied by CO-OP CHEMICAL CO., LTD., cation exchange capacity: 105 milliequivalents/100 g) having an average particle diameter of 2 μm was suspended in 10 liters of ion-exchanged water. To the suspension was added 10 g of an organic titanate compound of the above general formula (II-vi) (PLENACT KR44 (trade name): supplied by Ajinomoto-Fine-Techno Co., Inc.), and the mixture was stirred for 1 hour and then subjected to centrifugal separation. The resultant solid content was washed with water three times to give a white solid. The thus-obtained solid was dried at 100°C for 5 hours to give a surface-treated silicate filler (B-V). A sample for TGA measurement was prepared from this dried silicate filler. This sample was measured for a weight loss ratio at 900°C in the same manner as in B-I, and the measurement value was used as a ratio of an organic substance derived from the titanate compound in the silicate filler. This ratio was found to be 5 % by weight.

Example 1

(Preparation of polymer precursor)

A reactor with a thermometer, a stirrer and a reflux condenser was charged with 669.43 parts by weight of ion-exchanged water and 117.49 parts by weight of a 48 wt% sodium hydroxide aqueous solution, and 156.91 parts by weight of 2,2-bis(4-hydroxyphenyl)propane (to be sometimes referred to as "bisphenol A" for short hereinafter) and 0.31 part by weight of hydrosulfite were added. After dissolution was confirmed, 459.79 parts by weight of methylene chloride was added. While the mixture was stirred at a liquid temperature of 15 to 25°C, 75.63 parts by weight of phosgene was blown in over 60 minutes.

(Addition of Component B, interfacial polycondensation)

After completion of blowing of the phosgene into the reactor, an aqueous phase of the reaction mixture was withdrawn, 8.85 parts by weight of the above B-1 was suspended in the liquid of the aqueous phase, and the suspension was returned to the reactor. Further, a solution of 3.61 parts by weight of p-tert-butylphenol dissolved in 29.27 parts by weight of methylene chloride and 27.81 parts by weight of a 48 wt% sodium hydroxide aqueous solution were added, and the mixture was stirred with a homomixer for 14 minutes to obtain an emulsified state. Then, the operation of the homomixer was stopped, and the reaction mixture was allowed to stand at 35°C for 3 hours to complete the reaction. A product obtained after the reaction was a gel-like mixture in which a liquid in the reactor uniformly gelled.

(Separation)

The organic solvent and water were separated from the gel-like mixture, an isolated residue was washed with water, and a resin composition in a solid state was recovered by filtering. The above washing with water was repeated until the mother liquor thereof came to have a pH value of 7 or less and an electric conductivity of 50 μS or less. A white powder obtained by the washing with water was further dried at 105°C for 5 hours to give a final resin composition. In the thus-obtained resin composition, the content of the lamellar silicate having an organosilicon compound introduced thereinto, per 100 parts by weight of the polycarbonate resin, was 1.1 parts by weight, and the molecular weight distribution (weight average molecular weight/number average molecular weight) of the above powder, calculated on the basis of the above weight average molecular weight measurement, was 2.8.

Example 2

The reaction was carried out, and a resin composition in the form of a white powder was obtained from a formed gel-like mixture, in the same manner as in Example 1 except that the reaction was carried out with stirring with a

homomixer at 35°C for 3 hours after the emulsification. In the thus-obtained resin composition, the content of the lamellar silicate having an organosilicon compound introduced thereinto, per 100 parts by weight of the polycarbonate resin, was 1.9 parts by weight, and the molecular weight distribution (weight average molecular weight/number average molecular weight) of the above powder was 28.5

Comparative Example 1

(Preparation of polymer precursor)

A reactor with a thermometer, a stirrer and a reflux condenser was charged with 426.45 parts by weight of ion-exchanged water and 91.19 parts by weight of a 48 wt% sodium hydroxide aqueous solution, and 90.03 parts by weight of bisphenol A and 0.18 part by weight of hydrosulfite were added. After dissolution was confirmed, 268.51 parts by weight of methylene chloride was added. While the mixture was stirred at a liquid temperature of 15 to 25°C, 46.91 parts by weight of phosgene was blown in over 75 minutes.

(Addition of Component B, interfacial polycondensation)

After completion of blowing of the phosgene into the reactor, an aqueous phase of the reaction mixture was withdrawn, 5.33 parts by weight of the above B-I was suspended in the liquid of the aqueous phase, and the suspension was returned to the reactor. Further, a solution of 2.37 parts by weight of p-tert-butylphenol dissolved in 29.27 parts by weight of methylene chloride, 16.28 parts by weight of a 48 wt% sodium hydroxide aqueous solution and 1.07 parts by weight of triethylamine as a polymerization catalyst were added, and the mixture was stirred with a homomixer for 14 minutes to obtain an emulsified state. Then, the operation of the homomixer was stopped, and the reaction mixture was allowed to stand at 35°C for 3 hours to complete the reaction. In a product obtained after the reaction, no clear gel-like substance was found.

(Separation)

After completion of the reaction, an insoluble was recovered by filtering and washed with water, only to give a very small amount of a white powder having no thermoplastic properties. On the other hand, a methylene chloride solution obtained after the reaction was separated, the solution was repeatedly washed with water until a wash liquid came to have a pH of 7 or less and an electric conductivity of 50 μS or less. The solution after the washing with water was concentrated and dried and then the resultant solid was pulverized to give a white powder.

Comparative Example 2

A white powder was obtained in the same manner as in Example 1 except that the lamellar silicate (B-I) was replaced with 5 parts by weight of (B-III).

Comparative Example 3

99 Parts by weight of a polycarbonate resin powder (Panlite L-1225WX (trade name), supplied by Teijin Chemicals, Ltd.) and 1 part by weight of the above B-I were mixed, the mixture was melt-extruded in the form of strands with a vented twin-screw extruder at a cylinder temperature of 260°C and at a die temperature of 260°C while the vacuum degree in a vent portion was maintained at 27 kPa, and the strands were cut to form pellets.

Comparative Example 4

92 Parts by weight of a polycarbonate resin powder (Panlite L-1225WX (trade name), supplied by Teijin Chemicals, Ltd.) and 8 parts by weight of the above B-IV were mixed, the mixture was melt-extruded in the form of strands with a vented twin-screw extruder at a cylinder temperature of 260°C and at a die temperature of 260°C while the vacuum degree in a vent portion was maintained at 27 kPa, and the strands were cut to form pellets.

Comparative Example 5

84 Parts by weight of a polycarbonate resin powder (Panlite L-1225WX (trade name), supplied by Teijin Chemicals, Ltd.) and 16 parts by weight of the above B-IV were mixed, the mixture was melt-extruded in the form of strands with a vented twin-screw extruder at an extruder temperature of 260°C and at a die temperature of 260°C while the

vacuum degree in a vent portion was maintained at 27 kPa, and the strands were cut to form pellets.

Comparative Example 6

A polycarbonate resin powder (Panlite L-1225WX (trade name), supplied by Teijin Chemicals, Ltd.) was melt-extruded in the form of strands with a vented twin-screw extruder at an extruder temperature of 260°C and at a die temperature of 260°C while the vacuum degree in a vent portion was maintained at 27 kPa, and the strands were cut to form pellets.

Tables 1 and 2 show the measurement results of these. Production conditions in Tables simply describe the above contents and contents to be described later for easy comparisons.

Table 1

| | | Unit | Example 1 | Example 2 | Example 4 |
|---|---|---|---|---|---|
| Production conditions | Component B | - | B-I | B-I | B-V |
| | Component B-2 | - | Synthesized saponite | Synthesized saponite | Synthesized mica |
| | Component B-1 | - | Aminosilane | Aminosilane | Aminotitanate |
| | Production method of resin composition | - | Polymerization method | Polymerization method | Polymerization method |
| | Polycondensation conditions | - | Standing polymerization | Stirring polymerization | Standing polymerization |
| | Presence of polymerization catalyst | - | No | No | No |
| Properties of resin composition | Content of lamellar silicate (inorganic content) | Wt% | 1.0 | 1.7 | 1.2 |
| | Weight average molecular weight | - | 46,700 | 32,000 | 35,500 |
| | Storage elastic modulus | MPa | 2,540 | 3,890 | 3,130 |
| | Molecular weight distribution | - | 2.8 | 28.5 | 4.4 |

Table 2

| | | Unit | C.Ex.1 | C.Ex. 2 | C.Ex. 3 |
|---|---|---|---|---|---|
| Production conditions | Component B | - | B-I | B-III | B-I |
| | Component B-2 | - | Synthesized saponite | Synthesized saponite | Synthesized saponite |
| | Component B-1 | - | Aminosilane | No | Aminosilane |
| | Production method of resin composition | - | Polymerization method | Polymerization method | Kneading method |
| | Polycondensation conditions | - | Standing polymerization | Standing polymerization | - |
| | Presence of polymerization catalyst | - | Yes | No | - |
| Properties of resin composition | Content of lamellar silicate (inorganic content) | Wt% | 0.2 | 1.1 | 1.4 |
| | Weight average molecular weight | - | 42,800 | 45,100 | 33,400 |
| | Storage elastic modulus | MPa | 1,400 | 1,390 | 1,530 |
| C.Ex.: Comparative Example | | | | | |

Table 2 (continued)

| | | Unit | C.Ex.4 | C.Ex. 5 | C.Ex. 6 |
|---|---|---|---|---|---|
| Production conditions | Component B | - | B-IV | B-IV | No |
| | Component B-2 | - | Synthesized mica | Synthesized mica | - |
| | Component B-1 | - | No | No | - |
| | Production method of resin composition | - | Kneading method | Kneading method | - |
| | Polycondensation conditions | - | - | - | - |
| | Presence of polymerization catalyst | - | - | - | - |
| Properties of resin composition | Content of lamellar silicate (inorganic content) | Wt% | 2.6 | 5.2 | 0 |
| | Weight average molecular weight | - | 40,500 | 41,300 | 44,000 |
| | Storage elastic modulus | MPa | 1,660 | 3,110 | 1,410 |
| C.Ex.: Comparative Example | | | | | |

As is clear from the above Tables, it is seen that the aromatic polycarbonate resin composition of the present invention has high elasticity even with a small content of a silicate filler since it is produced in the specified silicate filler and in the absence of the polymerization catalyst. It is more clearly found in Fig. 1 that this effect is remarkable.

Further, a resin composition containing an aromatic polycarbonate having a narrow molecular weight distribution can be obtained by carrying out the polycondensation reaction in an emulsified state without stirring and without causing

a shear force to act.

Example 3

A reaction is carried out in the same manner as in Example 1 except that the lamellar silicate (B-I) was replaced with 8.85 parts by weight of (B-II). A mixture liquid in the reactor was poor in the uniformity of an emulsified state, and the reaction proceeded in a manner in which a while gel-like solid grew in the central portion of the reactor. This solid was treated in the same manner as in Example 1 to give a white powder. In the thus-obtained resin composition, the polycarbonate had a weight average molecular weight of 18,300 and the content of a lamellar silicate was 6.1 % by weight.

Example 4

A reaction was carried out, and a resin composition in the form of a white powder was obtained from a formed gel-like mixture, in the same manner as in Example 1 except that the lamellar silicate (B-I) was replaced with 8.85 parts by weight of (B-V). In the thus-obtained resin composition, the content of the lamellar silicate having an organic titanate compound introduced thereinto, per 100 parts by weight of the polycarbonate resin, was 1.3 parts by weight, and the molecular weight distribution (weight average molecular weight/number average molecular weight) of the above powder was 4.4.

Industrial Utility

According to the present invention, a high-elasticity polycarbonate resin composition can be obtained. This resin composition can be applied to various uses for various electronics and electric devices, office automation machines and equipment, automobile parts and machine parts and also to other various uses for agricultural materials, fishing materials, shipping containers, packaging containers and groceries.

Further, the resin composition of the present invention also has excellent moldability and is suitable for producing various small-thickness molded articles. Specific examples of the small-thickness injection-molded articles include various housing molded articles such as a battery housing, a body tube, a memory card, a speaker cone, a disk cartridge, a plane emission material, a mechanical part for a micro machine, a name plate, a housing for a personal computer, a tray and chassis for a CD or DVE drive, a tray and chassis for a copying machine, a light diffusing plate for a "immediately-beneath" type backlight for a liquid crystal display (in particular, for a large-screen liquid crystal television set of 15 inches or more) and an IC card.

## Claims

1. A process for the production of a resin composition comprising 100 parts by weight of an aromatic polycarbonate (Component A) and 0.01 to 50 parts by weight of a silicate filler (Component B), wherein,

   (I) Component B being a silicate filler prepared by introducing at least one compound (Component B-1) selected from (i) an organosilicon compound (Component B-1-i) containing a hydrolyzable group and/or a hydroxyl group bonded to a silicon atom and (ii) an organic titanate compound (Component B-1-ii) into a lamellar silicate (Component B-2) having an cation exchange capacity of 50 to 200 milliequivalents/100 g,
   (II) the process comprising reacting a polymer precursor of Component A by means of an interfacial polycondensation reaction in the presence of Component B and in the substantial absence of a polymerization catalyst.

2. The process of claim 1, wherein the polymer precursor is a product obtained by reacting a dihydric phenol and a carbonate precursor which lead to a structural unit of Component A, in the presence of an acid binder, an organic solvent and water.

3. The process of claim 1, wherein Component B is a silicate filler obtained by dispersing Component B-2 in a polar solvent and then adding Component B-1.

4. The process of claim 1, wherein Component B-2 is a lamellar silicate having an average particle diameter of at least 0.1 μm but less than 5 μm, said average particle diameter being a particle diameter corresponding to an accumulation degree of 50 % in particle diameters measured by a laser diffraction scattering method.

5. The process of claim 1, wherein Component B-1-i is an organosilicon compound of the following formula (I),

$$X_n\text{—}Si\text{—}R_{4-n} \qquad (I)$$

wherein n is an integer of 1 to 3, R is a monovalent organic group having 2 to 30 carbon atoms, which may contain a hetero atom, X is a hydrolyzable group or a hydroxyl group, each of X's in a quantity of n may be the same as, or different from, the other or every other and each of R in an quantity of 4-n may be the same as, or different from, the other or every other.

**6.** The process of claim 1, wherein Component B-1-ii is at least one organic titanate compound selected from the group consisting of compounds of the following formulae (II), (III) and (IV),

$$(R^1O)_m\text{—}Ti\text{—}R^2_{4-m} \qquad (II)$$

in the formula (II), $R^1$ is an alkyl group having 1 to 6 carbon atoms, $R^2$ is a monovalent organic group having 4 to 20 carbon atoms and m is an integer of 1 to 3,

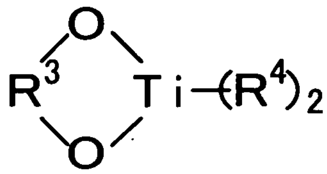

(III)

in the formula (III), $R^3$ is a divalent organic group having 1 to 6 carbon atoms and $R^4$ is a monovalent organic group having 4 to 20 carbon atoms,

$$(R^5O)_4\text{—}Ti \cdot [P\ (OR^6)_2OH]_2 \qquad (IV)$$

and in the formula (IV), $R^5$ is a monovalent organic group having 1 to 20 carbon atoms and $R^6$ is an alkyl group having 4 to 20 carbon atoms.

**7.** The process of claim 1, wherein Component B has an organic content of 0.1 to 50 % by weight.

**8.** The process of claim 1, wherein a mixture of Component B with the polar solvent are added to the polymer precursor for Component A, and then the interfacial polycondensation reaction is carried out.

**9.** The process of claim 1, wherein the interfacial polycondensation reaction is carried out in an emulsified state.

**10.** The process of claim 1, which comprises the steps of

(I) reacting a dihydric phenol and a carbonate precursor, which lead to a structural unit for Component A, in the presence of an acid binder, an organic solvent and water to obtain a polymer precursor (step-i),
(II) adding a mixture of Component B with a polar solvent to the thus-obtained polymer precursor to obtain a liquid mixture (step-ii),
(III) causing a shear force to act on the thus-obtained liquid mixture to bring said liquid mixture into an emulsified state and then reacting the polymer precursor by means of interfacial polycondensation in the emulsified state (step-iii), and
(IV) separating the organic solvent and water from a mixture obtained by the reaction, to obtain a resin composition in a solid state(step-iv).

**11.** The process of claim 10, which comprises the step of adding a monohydric phenol as a terminal stopper to the polymer precursor (step-$\alpha$) after the step-i and before the step-iii.

**12.** The process of claim 10, wherein the step-iii is a step in which the liquid mixture that is brought into an emulsified state is caused to undergo interfacial polycondensation reaction without substantially causing the shear force to act

thereon.

**13.** The process of claim 10, wherein the step-iv is a step in which the organic solvent and water are removed from the mixture obtained after the reaction and an isolated residue is washed with water to obtain the resin composition in a solid state.

**14.** A resin composition produced by the process of claim 1.

**15.** The resin composition of claim 14, which satisfies the following expression,

$$400X + 1{,}500 \leq Y \leq 1{,}400X + 1{,}500 \qquad (1)$$

wherein X is a content, expressed by a unit of % by weight, of an inorganic compound calculated from a weight ratio of an ashed residue after the resin composition is treated at 600°C in an electric furnace for 6 hours, Y is a storage elastic modulus, expressed by a unit of MPa, of the resin composition at 40°C.

Fig. 1

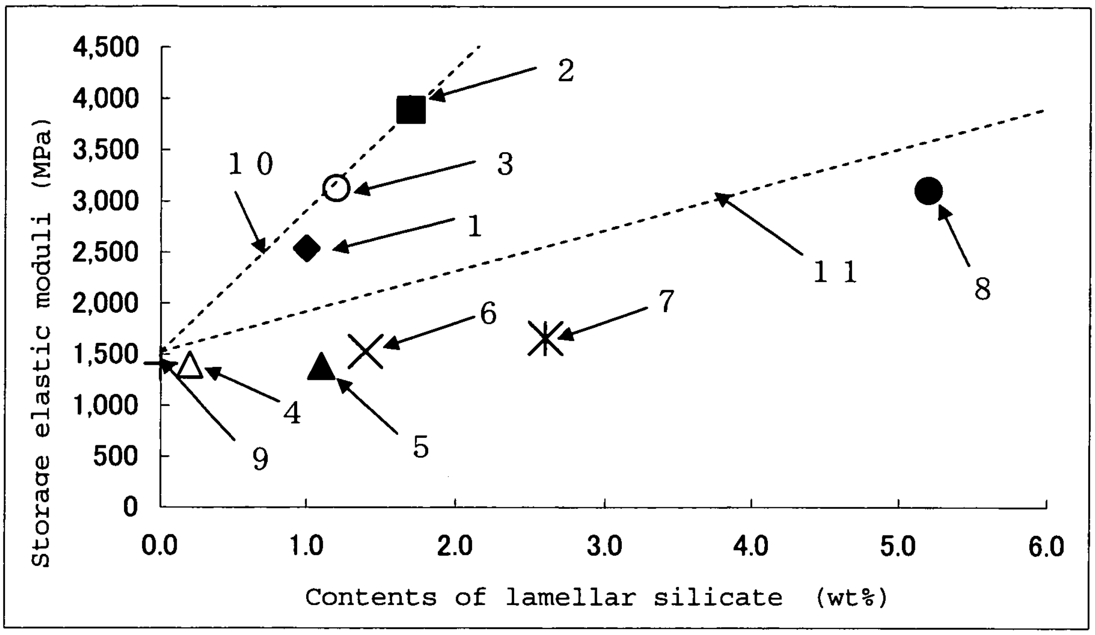
4,500
4,000
3,500
3,000
2,500
2,000
1,500
1,000
500
0
Storage elastic moduli (MPa)
0.0
1.0
2.0
3.0
4.0
5.0
6.0
Contents of lamellar silicate (wt%)
1
2
3
4
5
6
7
8
9
1 0
1 1

## INTERNATIONAL SEARCH REPORT

International application No.
PCT/JP2005/003419

A. CLASSIFICATION OF SUBJECT MATTER
Int.Cl$^7$ C08G64/24, C08K3/34, C08L69/00

According to International Patent Classification (IPC) or to both national classification and IPC

B. FIELDS SEARCHED

Minimum documentation searched (classification system followed by classification symbols)
Int.Cl$^7$ C08G64/00-64/42, C08L69/00

Documentation searched other than minimum documentation to the extent that such documents are included in the fields searched

| | | | |
|---|---|---|---|
| Jitsuyo Shinan Koho | 1926-2005 | Toroku Jitsuyo Shinan Koho | 1994-2005 |
| Kokai Jitsuyo Shinan Koho | 1971-2005 | Jitsuyo Shinan Toroku Koho | 1996-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | EP 1142954 A1 (KANEKA CORP.), 10 October, 2001 (10.10.01), Claims 1, 9 & WO 00/22042 A1 Claims 1, 9 | 1-15 |
| A | JP 2001-11170 A (Kao Corp.), 16 January, 2001 (16.01.01), Claim 1; Par. No. [0021] (Family: none) | 1-15 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 15 March, 2005 (15.03.05) | 05 April, 2005 (05.04.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3215558 A
- JP 9143359 A
- JP 7207134 A
- JP 7228762 A
- JP 7331092 A
- WO 9506090 A
- WO 0022042 A
- WO 03010235 A
- JP 6172508 A
- JP 8027370 A
- JP 2001055435 A
- JP 2002117580 A


### Non-patent literature cited in the description


- *Soil Sci.,* 1945, vol. 59, 13-24